# EUROPEAN PATENT APPLICATION

(11) **EP 4 727 211 A1**
(43) Date of publication of application: **15.04.2026**
(21) Application number: 24838345.7
(22) Date of filing: 20.03.2024
(51) Int. Cl.: H04W 36/00

(54) **COMMUNICATION METHOD AND RELATED DEVICE**

(30) Priority: 12.07.2023 CN 202310859458
(71) Applicant: Honor Device Co., Ltd., Shenzhen, Guangdong 518040 (CN)
(72) Inventor: LI, Haibo, Shenzhen, Guangdong 518040 (CN)
(74) Representative: Gill Jennings & Every LLP
(86) International application number: PCT/CN2024/082660
(87) International publication number: WO 2025/011085

(57) **Abstract**

Embodiments of this application provide a communication method and a related device. According to the communication method, once a UE cannot establish, in a call, an RRC connection with a network device corresponding to a cell currently being camped on, the UE may lower a priority of the cell that the UE is currently camped on, so that the UE may choose another cell other than a problem cell to camp on through cell reselection subsequently, thereby avoiding problems of call drops and silent calls caused by camping on the problem cell for a long time.

## Description

This application claims priority to Chinese Patent Application No. 202310859458.1, filed with China National Intellectual Property Administration on July 12, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

When a user equipment (User Equipment, UE) is in a call state, the UE originally camps on a cell A. Based on cell selection/cell reselection/cell handover, the UE may change from originally camping on a cell A to camping on a cell B. However, when the cell B is a problem cell, problems such as a Radio Link Failure (Radio Link Failure, RLF) may occur, and the UE performs cell selection. Because the UE originally camps on the cell B, and the cell B has strongest signal strength, the UE still chooses to camp on the cell B. In this case, the UE triggers a radio resource control (Radio Resource Control, RRC) connection reestablishment process. Once the RRC connection establishment fails, the UE enters an idle state (namely, an idle state). In this case, the UE performs cell reselection. Because a combination of the signal strength and the priority of the cell B is better than that of another cell, the UE still chooses the cell B and initiates an RRC connection establishment process. Once the RRC connection establishment fails again, the UE enters the idle state again. In this case, the UE performs cell reselection again. Same as the foregoing reason, because the combination of the signal strength and the priority of the cell B is better than that of another cell, the UE still chooses the cell B and initiates the RRC connection establishment process. It may be understood that because the combination of the signal strength and the priority of the cell B is better than that of another cell, the UE most probably always chooses the cell B when performing cell reselection. However, because the cell B is a problem cell, the UE cannot successfully establish the RRC connection with the cell B. This means that a process in which the UE chooses the cell B and the RRC connection cannot be successfully established between the UE and the cell B is cyclically performed. Once the number of times of circulation is excessively large, problems that a call of the UE ends (namely, a call is dropped) and that a call is silent for a long time may be caused. For example, once a time spent by the UE in choosing a cell B and finally successfully establishing the RRC connection with the cell B exceeds a specific threshold (for example, 20 seconds), the UE actively sends a BYE message to the cell B after the UE successfully establishes the RRC connection with the cell B, so that the call of the UE ends. In addition, because the UE is in the call state, the call of the UE cannot be continued if the UE does not successfully establish the RRC connection with the cell B. In other words, the UE may have a problem of silent calls.

Therefore, how to avoid the call drops of the UE and the silent calls in a call scenario is problem to be urgently resolved currently.

### SUMMARY

Embodiments of this application provide a communication method and a related device, to avoid call drops of a UE in a call scenario, and/or avoid or optimize problem of silent calls (for example, reducing a silence time of a call) for a long time.

According to a first aspect, this application provides a communication method. The method may apply to a terminal device. The method may include: The terminal device camps on a first cell. The terminal device performs a call in the first cell. The terminal device performs cell selection in a case in which a first network abnormality occurs during a call performed by the terminal device when camping on a first cell, and chooses to camp on the first cell. The terminal device starts a T301 timer, and sends a first message to a first network device, where the first network device is a network device corresponding to the first cell, and the first message is used to request random access. The terminal device lowers a carrier frequency priority of the first cell when the T301 timer times out. The terminal device performs cell reselection based on the lowered carrier frequency priority of the first cell, and chooses to camp on a second cell, where the second cell is different from the first cell. The terminal device establishes an RRC connection with a second network device, where the second network device is a network device corresponding to the second cell. The terminal device still performs the call on the second cell through the established RRC connection.

In the solution provided in this application, when the first network abnormality occurs during the call performed by the terminal device, the terminal device may perform cell selection. Because a cell originally camped on has strongest signal strength, the terminal device still chooses to camp on the cell, and prepares to establish the RRC connection. Correspondingly, the terminal device starts the T301 timer. Once the T301 timer times out, it indicates that the terminal device does not successfully establish the RRC connection. In this case, the terminal device may lower a carrier frequency priority (which may also be referred to as a priority for short below) of a cell on which the terminal device originally camps. In addition, cell reselection is performed after the priority is lowered, so as to reselect another cell and still perform a call in the cell. According to the method, the terminal device may lower a priority of a problem cell in a specific occasion or situation, and perform cell reselection based on the lowered priority of the problem cell, so as to avoid that the terminal device always chooses to camp on the problem cell during the cell reselection, thereby avoiding the call drop of the terminal device in the call scenario, and/or avoiding or optimizing the problem of silent calls for a long time (for example, reducing the silence time of the call).

It may be understood that the terminal device and the UE in this application have the same meaning.

In some embodiments of this application, the first cell may be a cell B. The second cell may be a cell A. In this case, the first network device may be a network device_2, and the second network device may be a network device_1.

In some embodiments of this application, the second cell may alternatively be a cell other than the cell A and the cell B.

In some embodiments of this application, the first message may be an MSG1.

With reference to the first aspect, in a possible implementation, after the terminal device lowers the carrier frequency priority of the first cell, the performing, by the terminal device, cell reselection specifically includes: An RRC layer in the terminal device sends a second message to an ML1 layer in the terminal device, where the second message is used to instruct the ML1 layer to perform accelerated cell reselection. The ML1 layer in the terminal device receives the second message. The terminal device performs the accelerated cell reselection based on the second message.

In the solution provided in this application, the terminal device may lower the priority of the problem cell before reselection, and send, to the ML1 layer through the RRC layer, a message used to instruct the ML1 layer to perform accelerated cell reselection after lowering the priority of the problem cell. However, after receiving the message, the ML1 layer in the terminal device may perform accelerated cell reselection based on the message. This method can reduce a duration of camping on the problem cell, thereby reducing a silence duration of a call caused by camping on the problem cell.

In some embodiments of this application, the second message may be an RRC depriority request (RRC depriority request).

With reference to the first aspect, in a possible implementation, the performing the accelerated cell reselection includes: a duration for which the terminal device camps on an original cell before performing the cell reselection is less than a first preset duration.

In the solution provided in this application, cell reselection may be accelerated by reducing a duration for which the cell is camped on the original cell before the cell reselection. This manner can reduce a duration required for triggering cell reselection, thereby accelerating triggering of cell reselection.

It may be understood that the first preset duration may be an original specified duration below.

It may be understood that the first preset duration may be a duration stipulated according to a related protocol, and may specifically be a duration configured by a network side for the terminal according to the related protocol. In some embodiments of this application, the first preset duration may be less than 1s. For example, the first preset duration may be 1s.

With reference to the first aspect, in a possible implementation, the performing the accelerated cell reselection further includes: a duration for which the terminal device evaluates a target cell during the cell reselection is less than a second preset duration, and the target cell includes the second cell.

In the solution provided in this application, cell reselection may be accelerated by reducing a duration for which the target cell is evaluated during the cell reselection. This manner can reduce a duration required for performing cell reselection (namely, choosing a cell to camp on) after cell reselection starts, thereby accelerating the cell reselection process.

It may be understood that the second preset duration may be an original evaluation duration below.

It may be understood that the second preset duration may be a duration stipulated according to a related protocol, and may specifically be a duration configured by a network side for the terminal according to the related protocol. In some embodiments of this application, the second preset duration may be less than 1.28s. For example, the second preset duration may be 1.28s.

With reference to the first aspect, in a possible implementation, a sum of a duration for which the terminal device camps on an original cell and the duration for evaluating the target cell is less than a duration of a T3411 timer currently used by the terminal device.

In the solution provided in this application, a sum of the duration for which the terminal device camps on the original cell before performing cell reselection and the duration for evaluating the target cell is less than the duration of the T3411 timer currently used by the terminal device. Through this method, the terminal device may complete, before the T3411 timer times out, the cell reselection process after the priority of the problem cell is lowered, so as to reselect a cell other than the problem cell in time before retriggering the TAU process, thereby reducing the duration of camping on the problem cell, and further reducing a silence call duration of camping on the problem cell.

In some embodiments of this application, the duration of the currently used T3411 timer may specifically be: a duration of the T3411 timer specified by the related protocol, namely, 10 seconds. In some embodiments of this application, the duration of the currently used T3411 timer may specifically be: a duration of the T3411 timer after an actual terminal device is optimized, for example, 2 seconds.

With reference to the first aspect, in a possible implementation, that the first network abnormality occurs during the call performed by the terminal device in the first cell specifically includes: during the call performed by the terminal device when camping on the first cell, a failure in reading a system message of the first cell causes a radio link failure RLF.

It may be understood that the first network abnormality that occurs during a call when camping on a first cell may alternatively be another network abnormality (for example, a handover failure). For details, reference may be made to the following.

With reference to the first aspect, in a possible implementation, the first cell is one of at least one neighboring cell of a third cell. Before the performing cell selection, the method further includes: The terminal device camps on the third cell to perform the call. The terminal device performs handover on the third cell to camp on the first cell. The first network abnormality occurs when the terminal device camps on the first cell to perform the call.

In some embodiments of this application, the third cell may be the cell A, and the first cell may be the cell B.

It may be understood that before the first network abnormality occurs during the call performed by the terminal device when camping on the first cell, the terminal device may perform handover on another cell on which the terminal device originally camps to the first cell.

With reference to the first aspect, in a possible implementation, after the terminal device performs handover on the third cell to camp on the first cell, the method further includes: The terminal device initiates a TAU process. After the terminal device sends the first message to the first network device, the method further includes: The terminal device starts a T3411 timer after the T301 timer times out. That the terminal device establishes an RRC connection with a second network device specifically includes: The terminal device re-initiates a TAU process when the T3411 timer times out, and establishes the RRC connection with the second network device.

With reference to the first aspect, in a possible implementation, in neighboring cells of the third cell, the first cell has strongest signal strength, and the first cell has a highest carrier frequency priority.

With reference to the first aspect, in a possible implementation, the lowered carrier frequency priority corresponding to the first cell is equal to a minimum value of priorities corresponding to several neighboring cells of the third cell.

According to a second aspect, this application provides a communication method. The method may apply to a terminal device. The method may include: performing cell reselection when a second network abnormality occurs during a call performed by the terminal device when camping on a first cell, and choosing to camp on the first cell. The terminal device starts a T300 timer, and sends a first message to a first network device, where the first network device is a network device corresponding to the first cell, and the first message is used to request random access. The terminal device lowers a carrier frequency priority of the first cell when the T300 timer times out. The terminal device performs cell reselection based on the lowered carrier frequency priority of the first cell, and chooses to camp on a second cell, where the second cell is different from the first cell. The terminal device establishes an RRC connection with a second network device, where the second network device is a network device corresponding to the second cell. The terminal device still performs the call on the second cell through the established RRC connection.

In the solution provided in this application, when the second network abnormality occurs during the call performed by the terminal device, the terminal device may perform cell reselection. Because the cell originally camped on has strongest signal strength, the terminal device still chooses to camp on the cell, and prepares to establish the RRC connection. Correspondingly, the terminal device starts the T300 timer. Once the T300 timer times out, it indicates that the terminal device does not successfully establish the RRC connection. In this case, the terminal device may lower a carrier frequency priority (which may also be referred to as a priority for short below) of a cell on which the terminal device originally camps. In addition, cell reselection is performed after the priority is lowered, so as to reselect another cell and still perform a call in the cell. According to the method, the terminal device may lower a priority of a problem cell in a specific occasion or situation, and perform cell reselection based on the lowered priority of the problem cell, so as to avoid that the terminal device always chooses to camp on the problem cell during the cell reselection, thereby avoiding the call drop of the terminal device in the call scenario, and/or avoiding or optimizing the problem of silent calls for a long time (for example, reducing the silence time of the call).

With reference to the second aspect, in a possible implementation, after the terminal device lowers the carrier frequency priority of the first cell, the performing, by the terminal device, cell reselection specifically includes: An RRC layer in the terminal device sends a second message to an ML1 layer in the terminal device, where the second message is used to instruct the ML1 layer to perform accelerated cell reselection. The ML1 layer in the terminal device receives the second message. The terminal device performs the accelerated cell reselection based on the second message.

With reference to the second aspect, in a possible implementation, the performing the accelerated cell reselection includes: a duration for which the terminal device camps on an original cell before performing the cell reselection is less than a first preset duration.

With reference to the second aspect, in a possible implementation, the performing the accelerated cell reselection further includes: a duration for which the terminal device evaluates a target cell during the cell reselection is less than a second preset duration, and the target cell includes the second cell.

With reference to the second aspect, in a possible implementation, a sum of a duration for which the terminal device camps on an original cell and the duration for evaluating the target cell is less than a duration of a T3411 timer currently used by the terminal device.

With reference to the second aspect, in a possible implementation, that the second network abnormality occurs during a call performed by the terminal device when camping on the first cell specifically includes: during the call performed by the terminal device when camping on the first cell, the RRC layer in the terminal device notifies a NAS layer that a lower layer failure has occurred, and determines, based on the notification, that a TAU fails.

With reference to the second aspect, in a possible implementation, the first cell is one of at least one neighboring cell of a third cell. Before the performing cell reselection, and choosing to camp on the first cell, the method further includes: The terminal device camps on the third cell to perform the call. The terminal device performs handover on the third cell to camp on the first cell. Performing cell selection when a first network abnormality occurs during a call performed by the terminal device when camping on the first cell, and choosing to camp on the second cell. The terminal device starts a T301 timer, and sends the first message to the first network device. The RRC layer in the terminal device notifies the NAS layer that the lower layer failure occurs when the T301 timer times out.

With reference to the second aspect, in a possible implementation, after the terminal device performs handover on the third cell to camp on the first cell, the method further includes: The terminal device initiates a TAU process. After the terminal device starts the T301 timer, and sends the first message to the first network device, the method further includes: The terminal device starts a T3411 timer when the T301 timer times out. That the terminal device starts a T300 timer specifically includes: The terminal device re-initiates a TAU process when the T3411 timer times out, and starts the T300 timer.

With reference to the second aspect, in a possible implementation, after the terminal device starts the T300 timer and sends the first message to the first network device, the method further includes: The terminal device starts a T3411 timer when the T300 timer times out. That the terminal device establishes an RRC connection with a second network device specifically includes: The terminal device re-initiates a TAU process when the T3411 timer times out, and establishes the RRC connection with the second network device.

With reference to the second aspect, in a possible implementation, in neighboring cells of the third cell, the first cell has strongest signal strength, and the first cell has a highest carrier frequency priority.

With reference to the second aspect, in a possible implementation, the lowered carrier frequency priority corresponding to the first cell is equal to a minimum value of priorities corresponding to several neighboring cells of the third cell.

According to a third aspect, this application provides a terminal device. The terminal device includes one or more processors and one or more memories. The one or more memories are coupled to the one or more processors, the memory is configured to store computer program code, the computer program code includes computer instructions, and the one or more processors invoke the computer instructions, so that the terminal device performs the method in the first aspect or any one of the implementations of the first aspect.

According to a fourth aspect, this application provides a terminal device. The terminal device includes one or more processors and one or more memories. The one or more memories are coupled to the one or more processors. The memory is configured to store computer program code, the computer program code includes computer instructions, and the one or more processors invoke the computer instructions, so that the terminal device performs the method in the second aspect or any one of the implementations of the second aspect.

According to a fifth aspect, this application provides a computer storage medium, including computer instructions. When the computer instructions run on a terminal device, the terminal device is caused to perform the method in the first aspect or any one of the implementations of the first aspect.

According to a sixth aspect, this application provides a computer storage medium, including computer instructions. When the computer instructions run on a terminal device, the terminal device is caused to perform the method in the second aspect or any one of the implementations of the second aspect.

According to a seventh aspect, an embodiment of this application provides a chip system, which is applied to a terminal device. The chip system includes at least one processor and an interface. The interface is configured to receive an instruction and transmit the instruction to the at least one processor. The at least one processor runs the instruction, so that the terminal device performs the method in the first aspect or any one of the implementations of the first aspect.

According to an eighth aspect, an embodiment of this application provides a chip system, which is applied to a terminal device. The chip system includes at least one processor and an interface. The interface is configured to receive an instruction and transmit the instruction to the at least one processor. The at least one processor runs the instruction, so that the terminal device performs the method in the second aspect or any one of the implementations of the second aspect.

According to a ninth aspect, an embodiment of this application provides a computer program product including an instruction. When the computer program product runs on a terminal device, the terminal device is caused to perform the method in the first aspect or any one of the implementations of the first aspect.

According to a tenth aspect, an embodiment of this application provides a computer program product including an instruction. When the computer program product runs on a terminal device, the terminal device is caused to perform the method in the second aspect or any one of the implementations of the second aspect.

It may be understood that the terminal device provided in the third aspect, the computer storage medium provided in the fifth aspect, the chip system provided in the seventh aspect, and the computer program product provided in the ninth aspect are all configured to perform the method in the first aspect or any one of the implementations of the first aspect. Therefore, for the beneficial effects that can be achieved, reference may be made to the beneficial effects of any possible implementation of the first aspect. Details are not described herein again. The terminal device provided in the fourth aspect, the computer storage medium provided in the sixth aspect, the chip system provided in the eighth aspect, and the computer program product provided in the tenth aspect are all configured to perform the method in the second aspect or any one of the implementations of the second aspect. Therefore, for the beneficial effects that can be achieved, reference may be made to the beneficial effects of any possible implementation of the second aspect. Details are not described herein again.

### BRIEF DESCRIPTION OF DRAWINGS

FIG. 1 is a schematic flowchart of cell reselection according to an embodiment of this application;
FIG. 2 is a schematic diagram of a communication method according to an embodiment of this application;
FIG. 3 is a schematic diagram of a structure of a modem according to an embodiment of this application;
FIG. 4 is a schematic diagram of a network architecture according to an embodiment of this application;
FIG. 5 is a flowchart of another communication method according to an embodiment of this application;
FIG. 6A is a flowchart of another communication method according to an embodiment of this application;
FIG. 6B is a flowchart of another communication method according to an embodiment of this application;
FIG. 7 is a schematic diagram of a hardware structure of a UE according to an embodiment of this application; and
FIG. 8 is a schematic diagram of a software structure of a UE according to an embodiment of this application.

### DESCRIPTION OF EMBODIMENTS

Technical solutions in embodiments of this application are clearly and completely described below with reference to drawings in embodiments of this application. In the descriptions of embodiments of this application, "/" means "or" unless otherwise specified. For example, A/B may represent A or B. In the text, "and/or" is merely an association relationship for describing associated objects, and indicates that three relationships may exist. For example, A and/or B may represent the following three cases: only A exists, both A and B exist, and only B exists. In addition, in the descriptions of embodiments of this application, "a plurality of" represents two or more.

It should be understood that the terms "first", "second" and the like in the description and claims of this application and the drawings are used to distinguish different objects, rather than used to describe a specific order. In addition, the terms "include", "have", and any variant thereof are intended to cover a non-exclusive inclusion. For example, a process, a method, a system, a product, or a device that includes a series of steps or units is not limited to the listed steps or units, and instead, further optionally includes a step or unit that is not listed, or further optionally includes another step or unit that is intrinsic to the process, the method, the product, or the device.

"Embodiment" in this application means that specific features, structures, or characteristics described with reference to the embodiment may be included in at least one embodiment of this application. The phrase appearing at various locations in this specification does not necessarily refer to a same embodiment, and is not an independent or alternative embodiment mutually exclusive of another embodiment. A person skilled in the art explicitly or implicitly understands that the embodiments in this application may be combined with other embodiments.

**Firstly, some terms and related technologies in this application are described below, to help a person skilled in the art have a better understanding.**

### 1. Idle state (namely, idle state) and connected state (namely, connected state)

In some embodiments of this application, states of a UE can include a connected state and an idle state. When the UE is powered on but does not establish an RRC connection with a network side, the UE is in the idle state. However, when the UE establishes the RRC connection with the network side, the UE is in the connected state.

In still some embodiments of this application, states of the UE may further include a connecting state (namely, connecting state). In this state, the UE is attempting to establish an RRC connection with a network, sends a corresponding request message, and waits for a response from the network.

In still some embodiments of this application, states of the UE may further include an inactive state (namely, inactive state). The inactive state is also referred to as a low power consumption state.

It may be understood that processes that the UE in the idle state needs to complete includes public land mobile network (Public Land Mobile Network, PLMN) selection, cell selection/cell reselection, location registration, and the like.

### 2. Cell selection

When a UE switches from a connected state to an idle state (for example, a radio link failure, or entering a flight mode), or after the UE chooses a PLMN, the UE needs to perform cell selection. In other words, the UE needs to choose a cell to camp on.

The following two cases exists for cell selection:

### (1) Initial cell selection

When the UE does not store any evolved universal terrestrial radio access (Evolved Universal Terrestrial Radio Access, E-UTRA) carrier frequency information (for example, the UE is turned on for the first time), the UE may scan all E-UTRA frequency bands based on capabilities of the UE. Once a suitable cell is found, the UE chooses the cell to camp on. It should be noted that on each carrier frequency, the UE only needs to search for a cell having strongest signal strength.

### (2) Cell selection based on stored information

When the UE already stores some previous E-UTRA carrier frequency information and some cell parameter information, the UE may preferentially search these carrier frequencies and cells. Once a suitable cell is found, the UE chooses the cell to camp on. If no suitable cell is found in the stored information, the UE starts the foregoing initial cell selection.

It should be noted that the foregoing "a suitable cell is found" means that the cell satisfies an S criterion, and the cell allows the UE to camp on.

It should be noted that in a cell selection process, no matter whether the UE stores carrier frequency information, the UE does not perform cell selection based on a carrier frequency priority, but performs cell selection only based on signal strength of a cell and the S criterion.

The S criterion means that Srxlev>0 and Squal>0. In other words, if a cell satisfies the S criterion, the cell certainly satisfies both Srxlev>0 and Squal>0. For specific meanings of Srxlev and Squal, reference may be made to related technical documents. Details are not described herein.

### 3. Cell reselection

According to the foregoing description, after performing cell selection, a UE can camp on a suitable cell. However, a cell on which the UE camps is not necessarily the best cell in a nearby area. Therefore, after the UE successfully camps on a cell, cell reselection may be immediately performed. It should be noted that the cell reselection is performed by a UE in the idle state, and is controlled by the UE.

In some embodiments of this application, the UE can start cell reselection only after the UE camps on the chosen cell for a specific time (for example, 1 second).

After the UE successfully camps on a cell, if the UE does not initiate an RRC connection (namely, initiates an RRC connection establishment process or an RRC connection reestablishment process), the UE starts measurement in the idle state. If the cell currently being camped on has relatively poor signal quality, for example, the signal strength is relatively weak, while a neighboring cell (namely, a neighboring cell) has relatively strong signal strength, the UE attempts to reselect a neighboring cell having relatively strong signal strength to camp on. In this case, the UE may first attempt to receive a system message of the neighboring cell having relatively strong signal strength, and then determine, based on the system message of the cell, whether the cell is suitable for camping on. If the UE determines, based on the system message of the cell, that the cell is suitable for camping on, the UE reselects the cell to camp on, restarts measurement, and still monitors signal strengths of the cell currently being camped on and the neighboring cell.

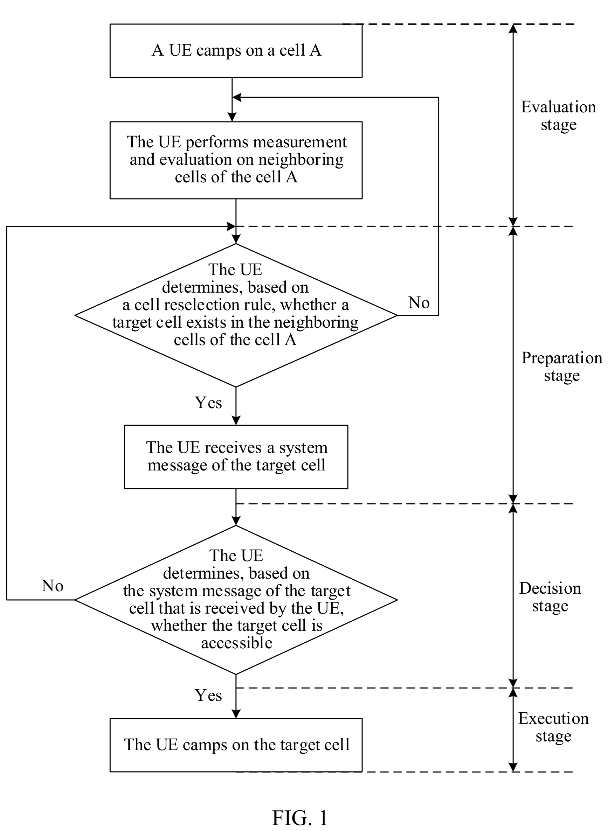

Refer to FIG. 1. FIG. 1 is a schematic flowchart of cell reselection according to an embodiment of this application. As shown in FIG. 1, a cell reselection process may include four stages: an evaluation stage, a preparation stage, a decision stage, and an execution stage. In an evaluation stage of cell reselection, the UE has camped on a cell A. In this case, the UE may perform measurement and evaluation on neighboring cells of the cell A. Next is a preparation stage of cell reselection. In the preparation stage, the UE may determine whether a target cell exists in the neighboring cells of the cell A based on a cell reselection rule. If the UE determines that the target cell exists in the neighboring cells of the cell A based on the cell reselection rule, the UE may receive a system message of the target cell. However, if the UE determines that the target cell does not exist in the neighboring cells of the cell A based on the cell reselection rule, the UE may return to the evaluation stage of cell reselection again and still perform measurement and evaluation on the neighboring cells of the cell A. The target cell refers to a cell that satisfies the cell reselection rule. In other words, the UE may determine whether a cell that satisfies the cell reselection rule (namely, the target cell) exists in the neighboring cells of the cell A. If the cell that satisfies the cell reselection rule exists, the UE may receive a system message of the cell that satisfies the cell reselection rule. Otherwise, the UE still performs measurement and evaluation on the neighboring cells of the cell A. When the UE receives the system message of the target cell, the UE may enter the decision stage of cell reselection. In the decision stage, the UE may determine, based on the system message of the target cell that is received by the UE, whether the target cell is accessible. If the target cell allows access of the UE, the UE enters the execution stage of cell reselection. In the execution stage, the UE may camp on the target cell. However, if the target cell does not allow access of the UE, the UE returns to the preparation stage of cell reselection again.

According to the foregoing description, if a cell has relatively high signal strength and the cell has a relatively high priority, another cell is not easily to be chosen by the UE.

It may be understood that for specific meanings of the cell reselection rule, the signal strength, and the priority, reference may be made to related technical documents. Details are not described herein.

### 4. Cell Handover (Handover, HO)

A UE may receive a measurement indication sent by a cell currently being camped on, and measure and evaluate signal strength and the like of a neighboring cell of the cell currently being camped on based on the measurement indication, to obtain a measurement result. The UE may generate a corresponding measurement report (Measurement Report, MR) based on the measurement result, and send the measurement report to the cell currently being camped on. After receiving the measurement report, the cell that the UE is currently camped on may communicate with the neighboring cell based on the measurement report. If the neighboring cell allows access, the cell that the UE is currently camped on may instruct the UE to perform cell handover.

It may be understood that the cell handover is performed when the UE is in a connected state. The cell handover may keep UE communication uninterrupted.

In addition, the measurement result obtained by the UE may indicate that the cell B has relatively high signal strength, and the cell B has a relatively high priority. When the cell A learns that the cell B allows the UE to access, the cell A may instruct the UE to perform handover on the camped cell from the cell A to the cell B.

If the cell B is a problem cell, an RLF may be caused due to a reason such as a system information reading failure when the UE camps on the cell B. In this way, the UE performs cell selection. Because the UE previously camps on the cell B and the cell B has relatively high signal strength, the UE still chooses the cell B to camp on. In this case, the UE initiates an RRC connection reestablishment process, and prepare to send an RRC connection reestablishment request (RRC Connection Reestablishment Request). Once the RRC connection fails, the UE enters the idle state, and the UE performs cell reselection. Because a combination of signal strength and a priority of the cell B is better than that of another neighboring cell of the cell B (for example, the cell B has relatively high signal strength, and the cell B has a relatively high priority), the UE still chooses the cell B to camp on, initiates the RRC connection establishment process, and prepares to send the RRC connection request (RRC Connection Request). Once the RRC connection fails, the UE enters the idle state again, and performs cell reselection again. Because the cell B has relatively high signal strength, and the cell B has a relatively high priority, the UE still chooses the cell B to camp on, and initiates the RRC connection establishment process again. This means that, if the UE cannot successfully establish the RRC connection with the network device corresponding to the cell B, the UE always chooses the cell B to camp on and initiates the RRC connection establishment process. In other words, the UE circularly performs the following steps. The UE chooses the cell B to camp on and initiates the RRC connection establishment process, and the RRC connection establishment fails.

It may be understood that if the UE circularly performs the foregoing steps for a plurality of times, problems that a call of the UE may be ended (namely, a call is dropped), and that a call is silent for a long time may be caused. For example, once a time in which the UE chooses the cell B and finally successfully establishes the RRC connection exceeds a specific threshold (for example, 20 seconds), the UE actively sends a BYE message to the cell B after the UE successfully establishes the RRC connection with the cell B, so that the call of the UE ends. In addition, because the UE is in the call state, the call of the UE cannot be continued if the UE has not successfully established the RRC connection with the cell B. In other words, the call of the UE may have a silent problem.

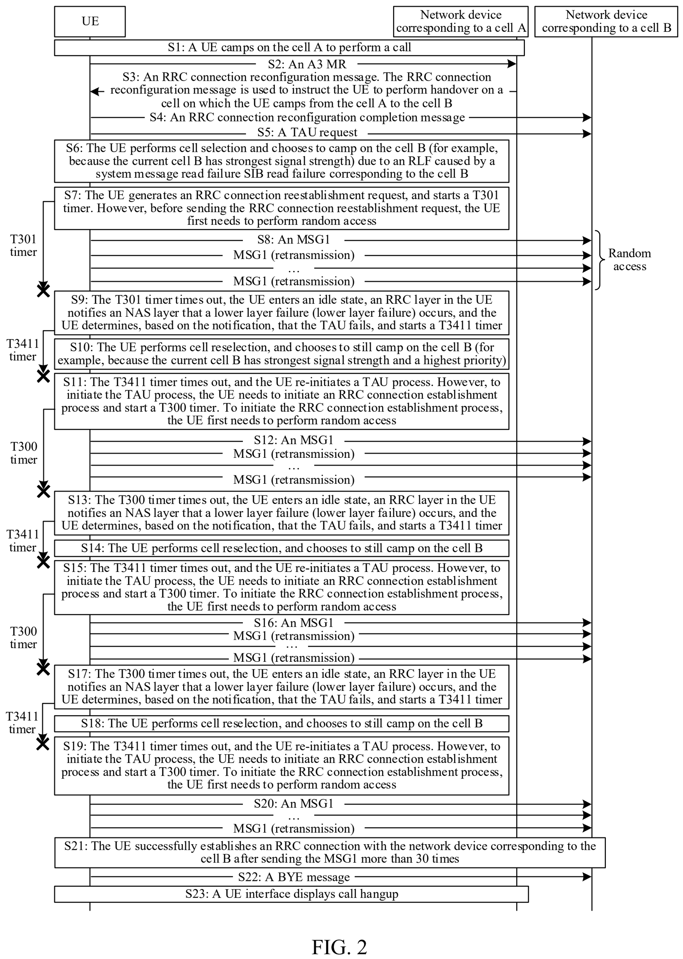

The foregoing problem is illustratively described below in conjunction with FIG. 2.

As shown in FIG. 2, FIG. 2 is a communication method according to an embodiment of this application. The method may include but is not limited to the following steps.

S1: A UE camps on a cell A to perform a call.

It may be understood that the UE may be camped on the cell A, and perform a call when the UE is camped on the cell A.

S2: The UE sends an A3 MR to a network device corresponding to the cell A.

After performing measurement and evaluation on neighboring cells of the cell A, the UE may send the A3 MR to the network device corresponding to the cell A.

Correspondingly, the network device corresponding to the cell A may receive the A3 MR sent by the UE.

S3: The UE sends an RRC connection reconfiguration message to the network device corresponding to the cell A. The RRC connection reconfiguration message is used to instruct the UE to perform handover on a cell on which the UE camps from the cell A to a cell B.

After receiving the A3 MR sent by the UE, the network device corresponding to the cell A may send the RRC connection reconfiguration (RRC Connection Reconfiguration) message to the UE. The RRC connection reconfiguration message may be used to instruct the UE to perform handover on the cell A to the cell B.

S4: The UE sends an RRC connection reconfiguration completion message to a network device corresponding to the cell B.

After receiving the RRC connection reconfiguration message, the UE may perform handover on the cell B to camp on, and send the RRC connection reconfiguration completion message (RRC Connection Reconfiguration Complete) to the network device corresponding to the cell B.

Correspondingly, the network device corresponding to the cell B may receive the RRC connection reconfiguration completion message.

S5: The UE sends a TAU request to the network device corresponding to the cell B.

After the UE performs handover on the cell A to the cell B to camp on, a TAU process may be initiated. In some embodiments of this application, after the UE performs handover on the cell A to the cell B to camp on, the TAU process may be initiated once detecting that a TA changes. Specifically, the UE may send the TAU request to the network device corresponding to the cell B to initiate the TAU process.

S6: The UE performs cell selection and chooses to camp on the cell B due to an RLF caused by a system message read failure SIB (System Information Block, system information block) read failure corresponding to the cell B.

After the UE performs handover on the cell A to the cell B to camp on, the UE may read the system message corresponding to the cell B. Due to the RLF is caused by the system information read failure (SIB read failure) corresponding to the cell B, the UE needs to perform cell selection. In some embodiments of this application, because the current cell B has strongest signal strength, the UE still chooses the cell B to camp on. In some embodiments of this application, the UE may perform cell selection based on carrier frequency information and a cell parameter that are previously stored. Because the cell B is a cell having strongest signal strength among several cells corresponding to the carrier frequency information and the cell parameter, the UE chooses the cell B to camp on.

It may be understood that the system message read failure corresponding to the cell B may be that the UE does not receive the system message (for example, the SIB message) of the cell B, or may be that the UE receives the system message of the cell B but does not parse successfully.

In some embodiments of this application, the UE may generate a TAU request. However, before the TAU request is sent, the RLF is caused because of the system message read failure corresponding to the cell B. In this case, the UE needs to establish an RRC connection and then send the TAU request.

S7: The UE generates an RRC connection reestablishment request, and starts a T301 timer. However, before sending the RRC connection reestablishment request, the UE first needs to perform random access.

After choosing to camp on the cell B, the UE may generate the RRC connection reestablishment request, and start the T301 timer. It may be understood that if the UE needs to send the RRC connection reestablishment request, the UE first needs to perform random access. A first step of the random access is that the UE sends an MSG1.

It may be understood that in this application, a specific sequence of generating, by the UE, the RRC connection reestablishment request and starting the T301 timer are not limited. An interval between generating, by the UE, the RRC connection reestablishment request and starting the T301 timer may be relatively short.

S8: The UE sends the MSG1 to the network device corresponding to the cell B.

The UE may send the MSG1 to the network device corresponding to the cell B.

It should be noted that as shown in FIG. 2, when the MSG1 sent by the UE to the network device corresponding to the cell B is unresponsive, the UE may retransmit the MSG1 to the network device corresponding to the cell B. In some embodiments of this application, the MSG1 sent by the UE remains unresponsive, and the UE may retransmit the MSG1 for a plurality of times.

It may be understood that the MSG1 sent by the UE being unresponsive is only an example of a random access failure, and should not be considered as a limitation to this application. Another case of random access failure may exist. For example, an MSG3 sent by the UE is unresponsive.

S9: The T301 timer times out, the UE enters an idle state, an RRC layer in the UE notifies an NAS layer that a lower layer failure (lower layer failure) occurs, and the UE determines, based on the notification, that the TAU fails, and starts a T3411 timer.

If the UE does not receive the RRC connection reestablishment message or an RRC connection reestablishment rejection message within a period defined by the T301 timer, the T301 timer times out. After the T301 timer times out, the UE enters the idle state, and the RRC layer in the UE may notify the NAS layer that the lower layer failure lower layer failure occurs (because the UE does not receive the RRC connection reestablishment message or the RRC connection reestablishment rejection message within the period defined by the T301 timer, it may be considered that the lower layer failure occurs. For the lower layer failure, reference is made to descriptions in a related standard protocol 3GPP TS 24008). The UE may start the T3411 timer based on the notification. It may be understood that before starting the T3411 timer, the UE may determine that the TAU fails based on the notification.

It may be understood that the RRC layer in the UE notifies the NAS layer that the lower layer failure occurs, which may indicate that the RRC connection reestablishment fails. In other words, the RRC connection is not successfully established. In this case, the UE cannot send the TAU request, and cannot receive a response message sent by a corresponding network device, and the UE may determine that the TAU fails.

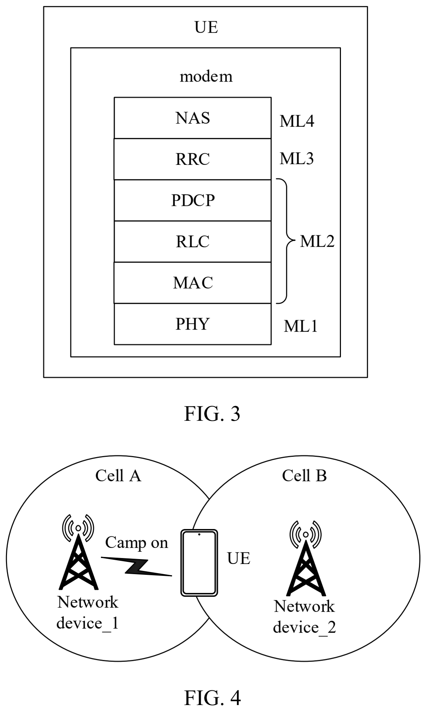

It may be understood that as shown in FIG. 3, the RRC layer and the NAS layer may be two modules in a modem of the UE. The RRC layer is a lower layer module of the NAS layer. The modem may include four layers, namely, an ML1 layer, an ML2 layer, an ML3 layer, and an ML4 layer. The ML1 layer refers to a PHY layer. The ML2 layer refers to an MAC layer, an RLC layer, and a PDCP layer. The ML3 layer refers to the RRC layer. The ML4 layer refers to the NAS layer. For specific meanings of the PHY layer, the MAC layer, the RLC layer, the PDCP layer, the RRC layer and the NAS layer, reference may be made to related technical documents. Details are not described herein.

S10: The UE performs cell reselection, and chooses to still camp on the cell B.

It may be understood that after the UE enters the idle state, cell reselection may be performed. The UE chooses to still camp on the cell B based on the cell reselection rule and the signal strength and the priorities of a cell currently being camped on (the cell B) and a neighboring cell (a neighboring cell of the cell B). This means that the cell chosen by the UE for camping on does not change.

In some embodiments of this application, because the cell B has relatively high signal strength, and the cell B has a relatively high priority, the UE still chooses the cell B to camp on.

In some embodiments of this application, because the current cell B has the strongest signal strength and the highest priority, the UE may choose to still camp on the cell B.

S11: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

After the T3411 timer times out, the UE may re-initiate the TAU process. To initiate the TAU process, the UE needs to initiate the RRC connection establishment process and start the T300 timer. To initiate the RRC connection establishment process, random access needs to be performed first. A first step of the random access is that the UE sends an MSG1.

S12: The UE sends the MSG1 to the network device corresponding to the cell B.

Because the UE still camps on the cell B, the UE may send the MSG1 to the network device corresponding to the cell B when performing random access.

It should be noted that as shown in FIG. 2, when the MSG1 sent by the UE to the network device corresponding to the cell B is unresponsive, the UE may retransmit the MSG1 to the network device corresponding to the cell B. In some embodiments of this application, the MSG1 sent by the UE remains unresponsive, and the UE may retransmit the MSG1 for a plurality of times.

It may be understood that for the specific implementation of step S12, reference may be made to the related descriptions in step S8. Details are not described herein again.

S13: The T300 timer times out, the UE enters the idle state, the RRC layer in the UE notifies the NAS layer that the lower layer failure (lower layer failure) occurs, and the UE determines, based on the notification, that the TAU fails, and starts the T3411 timer.

If the MSG1 sent by the UE remains unresponsive, the UE enters the idle state after the T300 timer times out. In this case, the UE may determine that the TAU fails, and start the T3411 timer again.

S14: The UE performs cell reselection, and chooses to still camp on the cell B.

It may be understood that after the UE enters the idle state, cell reselection may be performed. Similar to the above, the UE still chooses the cell B to camp on.

S15: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

S16: The UE sends the MSG1 to the network device corresponding to the cell B.

S17: The T300 timer times out, the UE enters the idle state, the RRC layer in the UE notifies the NAS layer that the lower layer failure (lower layer failure) occurs, and the UE determines, based on the notification, that the TAU fails, and starts the T3411 timer.

It may be understood that for the specific implementation of step S14 to step S17, reference may be made to the related descriptions in step S10 to step S13. Details are not described herein again.

S18: The UE performs cell reselection, and chooses to still camp on the cell B.

It may be understood that after the UE enters the idle state, cell reselection may be performed. Similar to the above, the UE still chooses the cell B to camp on.

S19: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

S20: The UE sends the MSG1 to the network device corresponding to the cell B.

It may be understood that for the specific implementation of step S18 to step S20, reference may be made to the related descriptions in step S10 to step S12. Details are not described herein again.

S21: The UE successfully establishes the RRC connection with the network device corresponding to cell B after sending the MSG1 more than 30 times.

It may be understood that after step S10 to step S13 are circulated for a plurality of times, the UE may successfully establish the RRC connection with the network device corresponding to the cell B. In some embodiments of this application, as shown in FIG. 2, after sending the MSG1 to the cell B for more than 30 times, the UE successfully establishes the RRC connection with the cell B. The UE may establish the RRC connection with the cell B through the random access process. For example, the RRC connection request (RRC Connection Request) is carried through the MSG3 in the random access process, the RRC connection establishment message (RRC Connection Setup) is carried through an MSG4 in the random access process, and the RRC connection completion message (RRC Connection Complete) is carried through an MSG5 in the random access process.

S22: The UE sends a BYE message to the network device corresponding to the cell B.

It may be understood that the call may be dropped, namely, the call is ended, when a case of silence for a long time occurs in the call of the UE. In some embodiments of this application, a relatively long time is spent for the UE to successfully establish an RRC connection with the network device corresponding to the cell B. If voice data cannot be sent within the period of time, a silence situation occurs.

In some embodiments of this application, as shown in FIG. 2, after sending the MSG1 to the network device corresponding to the cell B for more than 30 times, the UE successfully establishes the RRC connection with the network device corresponding to the cell B. In this case, because time from the RLF to the RRC connection establishment performed by the UE exceeds 20 seconds, the UE determines that a real-time transport protocol (Realtime Transport Protocol, RTP)/real-time transport control protocol (Realtime Transport Control Protocol, RTCP) times out (timeout), and sends the BYE message to the network device corresponding to the cell B after the UE establishes the RRC connection with the network device corresponding to the cell B, so that the call ends.

S23: A UE interface displays call hangup.

It may be understood that, after the UE sends the BYE message to the network device corresponding to the cell B, the call hang-up may be displayed on an interface. In this process, the UE automatically hangs up the call by sending the BYE message to the network device corresponding to the cell B. It may be understood that the BYE message is used to terminate a specified session or attempt to establish a session, namely, is used to announce a device or a service to leave a network. For example, during the call performed by the UE, the UE may send the BYE message to the cell currently being camped on to end the call.

It should be noted that the T301 timer is a timer for the RRC reestablishment. The T301 timer is started when the UE transmits the RRC connection reestablishment request. It may be understood that the UE first needs to perform random access when transmitting the RRC connection reestablishment request. Specifically, an upper layer module of the UE transfers a requirement of the UE for transmitting the RRC connection reestablishment request to a lower layer module. After receiving the requirement, the lower layer module first performs random access. A first step of the random access is that the UE sends the MSG1. Therefore, it may be understood that the T301 timer starts to timing when the UE sends the MSG1. The UE receives the RRC Connection Reestablishment (RRC connection reestablishment message) or the RRC Connection Reestablishment Reject (RRC connection reestablishment rejection message), and the T301 timer stops timing. If the UE does not receive the foregoing message within the period defined by the T301 timer, it is recorded that the T301 timer times out. The T300 timer is a timer for the RRC connection establishment. The T300 timer is started when the UE transmits the RRC connection request. It may be understood that the UE first needs to perform random access when transmitting the RRC connection request. Specifically, the upper layer module of the UE transfers a requirement of the UE for transmitting the RRC connection request to the lower layer module. After receiving the requirement, the lower layer module first performs random access. A first step of the random access is that the UE sends the MSG1. Therefore, it may be understood that the T300 timer starts to timing when the UE sends the MSG1. The UE receives the RRC Connection Setup (RRC connection establishment message) or the RRC Connection Reject (RRC connection rejection message), and the T300 timer stops timing. If the UE does not receive the foregoing message within the period defined by the T300 timer, it is recorded that the T300 times out. The T3411 timer is a timer started after the TAU fails. After the T3411 times out, the UE re-initiates the TAU process. In other words, the period defined by the T3411 timer is equal to an interval duration at which the UE initiates the TAU process.

In some embodiments of this application, when the UE performs step S5, the UE is in the connected state. When the UE performs step S6, step S10, step S14, and step S18, the UE is in the idle state. When the UE performs step S7, step S8, step S12, step S16, and step S20, the UE is in the connecting state.

Embodiments of this application provide a communication method and a related device. According to the method, once the UE continuously camps on the problem cell in the call, the UE may lower the priority of the problem cell, so that the UE may choose another cell to camp on through cell reselection, thereby avoiding the call drop and silence caused by long-time camping on the problem cell.

**To better understand a communication method and a related device in embodiments of this application, a network architecture used in embodiments of this application is described below.**

Refer to FIG. 4. FIG. 4 is a schematic diagram of a network architecture according to an embodiment of this application. As shown in FIG. 4, the network architecture may include at least two cells (for example, a cell A belonging to a network device_1 and a cell B belonging to a network device_2) and at least one UE. The cell A may be a cell on which the UE camps. The cell B may be a neighboring cell (namely, a neighboring cell) of the cell A. In other words, the cell B is a cell among at least one neighboring cell of the cell A.

In some embodiments of this application, one network device may correspond to one or more cells. The cell A and the cell B may belong to a same network device. In other words, the network device_1 and the network device_2 may be the same network device. In this case, the UE performs handover in the network device. Optionally, the cell A and the cell B may belong to different network devices. In other words, the network device_1 and the network device_2 may be different network devices. In this case, the UE performs handover between network devices.

The technical solutions in embodiments of this application may be applied to various communication systems, for example, a global system for mobile communications (Global System for Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), an LTE system, an LTE frequency division duplex (Frequency Division Duplex, FDD) system, an LTE time division duplex (Time Division Duplex, TDD) system, a universal mobile telecommunications (Universal Mobile Telecommunications System, UMTS) system, an enhanced data rate for GSM evolution (Enhanced Data Rate for GSM Evolution, EDGE) system, and a worldwide interoperability for microwave access (Worldwide Interoperability for Microwave Access, WiMAX) system. The technical solutions in embodiments of this application may further be applied to another communication system, for example, a public land mobile network (Public Land Mobile Network, PLMN) system, a fifth generation (5th Generation, 5G) system or a communication system after the 5G, or a new radio (New Radio, NR). This is not limited in embodiments of this application.

The UE in embodiments of this application may also be referred to as a terminal device (terminal), a user terminal, a mobile station (Mobile Station, MS), a mobile terminal (Mobile Terminal, MT), or the like. The terminal device may be a device that has a wireless transceiver function and can cooperate with the network device to provide a communication service for a user. The terminal device may be a handheld terminal, a notebook computer, a user unit (Subscriber Unit), a cellular phone (Cellular Phone), a smart phone (Smart Phone), a wireless data card, a personal digital assistant (Personal Digital Assistant, PDA) computer, a tablet computer, a wireless modem (modem), a handheld device (handheld), a laptop computer (Laptop Computer), a cordless phone (Cordless Phone), or a wireless local loop (Wireless Local Loop, WLL) station, a machine type communication (Machine Type Communication, MTC) terminal, a wearable device (for example, a smart watch, smart bracelet, or a pedometer), an on-board device (for example, a car, a bicycle, an electric vehicle, a plane, a ship, a train, or a high-speed train), a virtual reality (Virtual Reality, VR) device, an augmented reality (Augmented Reality, AR) device, a wireless terminal in industrial control (Industrial Control), a smart household device (for example, a refrigerator, a television, an air conditioner, or an electric meter), an intelligent robot, a workshop device, a wireless terminal in self-driving (Self Driving), a wireless terminal in remote medical surgery (Remote Medical Surgery), a wireless terminal in Smart Grid (Smart Grid), a wireless terminal in transportation safety (Transportation Safety), a wireless terminal in smart city (Smart City), a wireless terminal in smart home (Smart Home), a flight device (for example, an intelligent robot, a drone), or a wireless terminal in a 5G network or a future communication network. This is not specifically limited in this embodiment of this application.

The network device in embodiments of this application may be a device configured to communicate with the UE. For example, the network device may be a base station (Base Transceiver Station, BTS) in a global system for mobile communications (Global System for Mobile Communications, GSM) system or a code division multiple access (Code Division Multiple Access, CDMA) system, or may be a base station (NodeB, NB) in a wideband code division multiple access (Wideband Code Division Multiple Access, WCDMA) system, or may be an evolved base station (evolutional Node B, eNB, or eNodeB) in an LTE system, or may be a wireless controller in a cloud radio access network (Cloud Radio Access Network, CRAN) scenario, or the network device may be a relay station, an access point, an on-board device, a wearable device, or a network device in a future 5G network or a network after the 5G, or a network device in a future evolved PLMN network, or the like, for example, a transmission point (TRP or TP) in an NR system, a base station (gNB) in the NR system, one antenna panel or a group (including multiple antenna panels) of antenna panels of a base station in a 5G system, and the like. This is not limited in embodiments of this application.

Optionally, the base station in embodiments of this application may include base stations in various forms, for example, a macro base station, a micro base station (also referred to as a small cell), a relay station, an access point, a next generation base station (gNodeB, gNB), a transmission point (Transmitting and Receiving Point, TRP), a transmission Point (Transmitting Point, TP), a mobile switching center, and a device that undertakes a base station function in device-to-device (Device-to-Device, D2D), a vehicle to everything (Vehicle-to-Everything, V2X), a machine to machine (Machine-to-Machine, M2M) communication, and the like. This is not specifically limited in embodiments of this application.

A specific structure of an execution body of a method provided in embodiments of this application is not specifically limited in embodiments of this application, provided that communication can be performed according to the method provided in embodiments of this application by running a program that records code of the method provided in embodiments of this application. For example, the method provided in embodiments of this application may be performed by the UE or the network device, or may be performed by a functional module in the UE or the network device that can invoke and execute a program.

**Based on the foregoing network architecture, a communication method provided in an embodiment of this application is described below.**

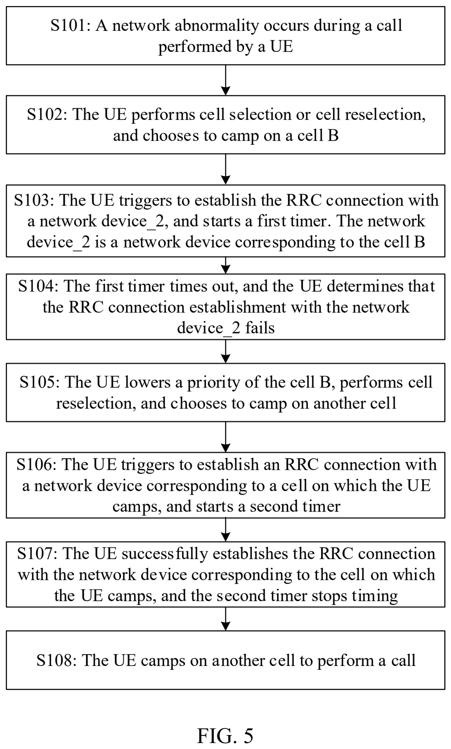

Refer to FIG 5. FIG. 5 is a flowchart of another communication method according to an embodiment of this application. The communication method may include, but is not limited to, the following steps.

S101: A network abnormality occurs in a call of a UE.

Specifically, a network abnormality may occur during a call performed by the UE when camping on a cell (for example, a cell A), or a network abnormality may occur during a call performed by the UE when camping on another cell (for example, a cell B). This is not limited in this application. For example, the network abnormality may include, but is not limited to, the following three cases.

In some embodiments of this application, a network abnormality occurs during a call performed by the UE when camping on the cell A.

In some embodiments of this application, the UE originally camps on the cell A to perform a call. After the UE sends a corresponding measurement report (MR) to a network device_1, the network device_1 may instruct, based on the measurement report, the UE to perform handover (HO) on the cell A to the cell B to camp on. A network abnormality occurs during the call performed by the UE when camping on the cell B.

Specifically, the network device_1 may send an RRC connection reconfiguration (RRC Connection Reconfiguration) message to the UE. The RRC connection reconfiguration message may be used to instruct the UE to perform handover on the cell A to the cell B to camp on. After receiving the RRC connection reconfiguration message, the UE may perform handover on the cell B to camp on, and send an RRC connection reconfiguration completion (RRC Connection Reconfiguration Complete) message to a network device_2. Correspondingly, the network device_2 may receive the RRC connection reconfiguration completion message. After the network device_2 receives the RRC connection reconfiguration completion message, the UE completes the handover on the cell A to the cell B.

It may be understood that the measurement report sent by the UE to the network device_1 may be an A3 MR (also referred to as an A3 event), or may be another type of measurement reports such as an A5 MR (also referred to as an A5 event). This is not limited in this application. It may be understood that the A3 MR indicates that quality of the neighboring cell is higher than that of a serving cell by an absolute threshold. The A5 MR may indicate that the quality of the servicing cell is lower than an absolute threshold, while the quality of the neighboring cell is higher than an absolute threshold. It may be understood that the serving cell refers to a cell that currently provides service to the UE. In some embodiments of this application, a serving cell of a UE may be understood as a cell on which the UE currently camps. It may be understood that for specific meanings of the measurement report, the A3 MR, and the A5 MR, reference may be made to related technical documents. Details are not described herein.

In some embodiments of this application, the UE originally camps on the cell A to perform a call. The UE may alternatively camp on the cell B in a manner such as cell reselection. A network abnormality occurs during the call performed by the UE when camping on the cell B.

In some embodiments of this application, the network abnormality may be a radio link failure. In a possible implementation, after receiving a system information read failure (SIB read failure) message, the UE may determine the radio link failure. In still another possible implementation, a reason for the radio link failure may include any one or more of the following: an uplink radio link control (Radio Link Control, RLC) reaches a maximum number of times of retransmission, a Preamble message reaches a maximum number of times of sending, and a downlink loss of synchronization.

In some embodiments of this application, the network abnormality may be an RRC connection release (RRC Connection Release).

In some embodiments of this application, the network abnormality may be a periodic TAU failure of the UE. An English full name of the TAU is Tracking Area Update, which means tracking area update. The TAU may be classified into a periodic TAU and an aperiodic TAU. The periodic TAU refers to that the UE periodically sends a TAU request (TAU Request) to a mobility management entity (Mobility Management Entity, MME), to ensure that the UE can respond to paging of a network, to perform data transmission. The aperiodic TAU refers to a TAU triggered by another reason (for example, an HO).

In some embodiments of this application, the network abnormality may be a handover (HO) failure.

It may be understood that the network abnormality occurring in the call of the UE may further include another content. This is not limited in this application.

S102: The UE performs cell selection or cell reselection, and chooses to camp on the cell B.

After the network abnormality occurs in the process in which the UE performs the call, the UE may perform cell selection or cell reselection, and choose the cell B to camp on.

It may be understood that the UE may determine whether to perform cell selection or cell reselection based on a specific network abnormality occurring in a call. For example, when the network abnormality occurring in the call of the UE is an RLF, the UE performs cell selection. For example, when the network abnormality occurring in the call of the UE is the RRC connection release, the UE performs cell reselection. For example, when the network abnormality occurring in the call of the UE is the periodic TAU failure of the UE, the UE performs cell reselection. For example, when the network abnormality occurring in the call of the UE is a handover failure, the UE performs cell selection.

It may be understood that in several neighboring cells of the cell that the UE is currently camped on, the cell B has relatively high signal strength, and the cell B is a relatively high priority. In other words, a combination of the signal strength and the priority of the cell B is better than that of another neighboring cell of the cell that the UE is currently camped on. In some embodiments of this application, in several neighboring cells of the cell that the UE is currently camped on, the cell B has strongest signal strength, and the cell B has a highest priority.

In some embodiments of this application, the cell that the UE is currently camped on is the cell A. The cell B is a neighboring cell of the cell A. In other words, the cell B is a neighboring cell of the cell that the UE is currently camped on. In this case, because the cell B has relatively high signal strength and a relatively high priority, the UE may choose to camp on the cell B during cell reselection.

In some embodiments of this application, the cell that the UE is currently camped on is the cell B. In this case, because the UE originally camps on the cell B, the UE stores carrier frequency information and cell parameter information of the cell B. When performing cell selection, the UE may choose the cell based on the carrier frequency information and the cell parameter information that are stored in the UE, and then the UE may preferentially consider the cell B. In addition, because the cell B has strongest signal strength, the UE may choose the cell B to camp on.

S103: The UE triggers to establish the RRC connection with the network device_2, and starts a first timer. The network device_2 is the network device corresponding to the cell B.

After the UE performs cell selection or cell reselection and chooses to camp on the cell B, the UE may trigger to establish the RRC connection with the network device_2 and start the first timer. It may be understood that the network device_2 is a network device corresponding to the cell B.

In some embodiments of this application, the UE may establish the RRC connection with the network device_2 by initiating an RRC connection reestablishment process. In this case, the first timer is a T301 timer. For related descriptions of the T301 timer, reference may be made to the above and the related technical documents. Details are not described herein again.

In some embodiments of this application, the UE may establish the RRC connection with the cell B by triggering the RRC connection establishment process. In this case, the first timer is a T300 timer. For related descriptions of the T300 timer, reference may be made to the above and the related technical documents. Details are not described herein again.

It should be noted that the UE prepares to send an RRC connection reestablishment request when initiating the RRC connection reestablishment process. However, the UE prepares to send an RRC connection establishment process when initiating the RRC connection establishment process.

It may be understood that the UE may determine, based on the network abnormality occurring in the call, whether the UE establishes the RRC connection with the network device_2 by initiating the RRC connection reestablishment process or establishes the RRC connection with the network device_2 by initiating the RRC connection establishment process.

For example, if the network abnormality occurring in the call of the UE is the RLF, the UE performs cell selection, and chooses the cell B to camp on. After the UE camps on the cell B, the UE initiates the RRC connection reestablishment process.

For example, if the network abnormality occurring in the call of the UE is the RRC connection release, the UE performs cell reselection, and chooses the cell B to camp on. After the UE camps on the cell B, the UE initiates the RRC connection establishment process.

For example, if the network abnormality occurring in the call of the UE is the periodic TAU failure, the UE performs cell reselection, and chooses the cell B to camp on. After the UE camps on the cell B, the UE initiates the RRC connection establishment process.

For example, if the network abnormality occurring in the call of the UE is the handover failure, the UE performs cell selection, and chooses the cell B to camp on. After the UE camps on the cell B, the UE initiates the RRC connection reestablishment process.

It may be understood that when the UE triggers to establish the RRC connection with the network device_2, random access needs to be first performed. Specifically, the UE may send an MSG1 to the network device_2. The MSG1 is a Random Access Preamble, namely, a random access preamble. After receiving the MSG1, the network device_2 sends an MSG2 to the UE, and then the random access is completed. The MSG2 is a Random Access Response, namely, a random access response. It may be understood that if the MSG1 sent by the UE to the network device_2 is unresponsive, the UE may retransmit the MSG1 to the network device_2. In some embodiments of this application, if the MSG1 sent by the UE to the network device_2 is unresponsive, the UE may retransmit the MSG1 to the network device_2 for a plurality of times.

It should be noted that regardless of whether the UE establishes the RRC connection with the network device_2 by initiating the RRC connection reestablishment process or establishes the RRC connection with the network device_2 by initiating the RRC connection establishment process, the UE first needs to perform random access. For related descriptions of the random access, reference may be made to the above and the related technical documents.

In some embodiments of this application, the UE triggers to establish the RRC connection with the network device_2 due to a service type such as MO Signalling (namely, signaling sent by the MO, for example, a TAU request) or MO data (which may be understood as that the MO needs to perform data transmission). In his application, a reason for the UE triggers to establish the RRC connection with the network device_2 is not limited. In a call scenario, an MO (Mobile Original) may be understood as a calling device initiating a call. For related meanings of the MO Signalling and the MO data, reference may be made to related technical documents. Details are not described herein.

S104: The first timer times out, and the UE determines that the RRC connection establishment with the network device_2 fails.

After the first timer times out, the UE may determine that the RRC connection establishment between the UE and the network device_2 fails, and the UE enters an idle state. In this case, the UE still camps on the cell B. It may be understood that expiring of the first timer means that the UE does not successfully establish the RRC connection with the network device_2 within a period defined by the first timer.

In some embodiments of this application, the first timer is the T301 timer. The T301 timer may start to timing when the UE sends the MSG1. If the UE does not receive the RRC Connection Reestablishment or the RRC Connection Reestablishment Reject within a period defined by the T301 timer, the T301 timer times out, and the UE may determine that the RRC connection establishment between the UE and the network device_2 fails.

In some embodiments of this application, the first timer is the T300 timer. The T300 timer may start to timing when the UE sends the MSG1. If the UE does not receive the RRC Connection Setup message or the RRC Connection Reject message within the period defined by the T300 timer, the T300 timer times out, and the UE may determine that the RRC connection establishment between the UE and the network device_2 fails.

In some embodiments of this application, the reason for the timeout of the first timer may be that the MSG1 sent by the UE to the network device_2 is unresponsive (namely, the UE does not receive a response message corresponding to the MSG1 sent by the network device_2). It may be understood that the MSG1 sent by the UE to the network device_2 is unresponsive, the UE retransmits the MSG1 to the network device_2 for a plurality of times, and the UE may take a period of time to retransmit the MSG1 for a plurality of times, the UE still does not receive a response message corresponding to the MSG1 that is sent by the network device_2 until a duration corresponding to the first timer T300 timer arrives, and further, the UE also fails to receive the RRC Connection Setup message or the RRC Connection Reject message. Therefore, the T300 timer times out.

In some embodiments of this application, the reason for the timeout of the first timer may be that the MSG3 sent by the UE to the network device_2 is unresponsive (namely, the UE does not receive a response message corresponding to the MSG3 sent by the network device_2). It may be understood that if the UE establishes the RRC connection with the network device_2 by initiating the RRC connection establishment process, that the MSG3 sent by the UE to the network device 2 is unresponsive may specifically include: the RRC connection request (RRC Connection Request) sent by the UE to the network device_2 is unresponsive (the RRC connection request may be carried by the MSG3). Similarly, if the UE establishes the RRC connection with the network device_2 by initiating the RRC connection reestablishment process, that the MSG3 sent by the UE to the network device_2 is unresponsive may specifically include: the RRC connection reestablishment request (RRC Connection Reestablishment Request) sent by the UE to the network device_2 is unresponsive. It may be understood that the MSG3 sent by the UE to the network device_2 is unresponsive, the UE retransmits the MSG3 to the network device_2 for a plurality of times, and the UE may take a period of time to retransmit the MSG3 for a plurality of times, the UE still does not receive a response message corresponding to the MSG3 that is sent by the network device_2 until a duration corresponding to the first timer T300 timer arrives, and further, the UE also fails to receive the RRC Connection Setup message or the RRC Connection Reject message. Therefore, the T300 timer times out.

It may be understood that another reason for the timeout of the first timer may exists, and this application does not specifically limit the reason for the timeout of the first timer.

S105: The UE lowers a priority of the cell B, performs cell reselection, and chooses to camp on another cell.

The RRC connection establishment between the UE and the network device_2 fails, and after the UE enters an idle state, the UE may lower the priority of the cell B. When the priority of the cell B is lowered, the UE may perform cell reselection. In this case, because the priority of the cell B is lowered, the UE can be enabled to no longer choose the cell B, but choose another cell (for example, the cell A) to camp on.

It may be understood that there a plurality of manners in which the UE lowers the priority of the cell B exist. This is not limited in this application. For example, some manners in which the UE lowers the priority of the cell B are listed below.

In some embodiments of this application, the UE may include the cell B in a low-priority queue.

For example, when performing cell reselection, the UE may find a cell A, a cell B, a cell C, a cell D, and a cell E. Before the UE lowers the priority of the cell B, the low-priority queue includes the cell A and the cell D, a medium-priority queue includes the cell C, and a high-priority queue includes the cell B and the cell E. The UE may include the cell B in the low-priority queue. In this way, when the UE performs cell reselection, the cell B is no longer reselected, which is the problem cell.

It may be understood that the low-priority queue, the medium-priority queue, and the high-priority queue may be set based on an actual requirement. For example, priorities of cells in the low-priority queue are less than 5, priorities of cells in the medium-priority queue are 5, and priorities of cells in the high-priority queue are not less than 6.

In some embodiments of this application, the UE may lower the priority of the cell B based on the lowest priority of a cell among neighboring cells of the cell B. Specifically, the UE may lower the priority of the cell B, and the lowered priority of the cell B is the same as the lowest priority of the cell among neighboring cells of the cell B.

For example, when performing cell reselection, the UE may find a cell A, a cell B, a cell C, a cell D, and a cell E. Before the UE lowers the priority of the cell B, the priority of the cell A is 4, the priority of the cell B is 6, the priority of the cell C is 5, the priority of the cell D is 4, and a priority of the cell E is 6. A signal strength of the cell E is worse than a signal strength of the cell B. It may be learned that the lowest priority of the cell among neighboring cells of the cell B is 4. The UE may lower the priority of the cell B to 4. In this way, when the UE performs cell reselection, the cell B is no longer reselected, which is the problem cell.

In some embodiments of this application, the UE may lower the priority of the cell B, so that the lowered priority of the cell B does not exceed priorities of f% of neighboring cells of the cell B. It may be understood that f may be set based on an actual requirement. This is not limited in this application. For example, f may be 80.

In some embodiments of this application, the priority of the cell may be understood as a carrier frequency priority corresponding to the cell, or referred to as a frequency priority.

It may be understood that triggering cell reselection and performing cell reselection require the UE to satisfy several conditions. For example, cell reselection can be performed only after a duration for which the UE camps on the cell currently being camped on reaches a specified duration (for example, 1 second). For another example, during the cell reselection, cell reselection can be performed only after a duration for the UE to evaluate a target cell reaches a specific duration (for example, 3 seconds). This means that after lowering the priority of the cell B, the UE does not immediately perform cell reselection, and the cell reselection process further needs to take a specific time (for example, the duration for the UE to evaluate the target cell). In other words, after the UE lowers the priority of the cell B, the UE needs to wait for cell reselection and wait to perform cell reselection.

In some embodiments of this application, after the UE lowers the priority of the cell B, cell reselection may be accelerated, thereby reducing a time spent in camping on a problem cell and reducing silence time in a call to some extent. For details of a specific method for accelerating cell reselection, reference may be made to the related description of step S211. Details are not described herein.

In some embodiments of this application, after performing step S104, and before performing step S105, the UE may perform cell reselection. After the UE performs step S104 and before the UE performs step S105, because the combination of the signal strength and the priority of the cell B is better than that of another cell, and the UE was camped on the cell B, the UE performs M cell reselections and chooses the cell B each time. After the cell B is chosen for M times, the UE does not successfully establish the RRC connection with the network device_2. In this case, the UE may lower the priority of the cell B (namely, perform step S105). It may be understood that for manners in which the UE lowers the priority of the cell B, reference may be made to the foregoing description. Details are not described herein.

It may be understood that M may be a non-negative integer. A specific value of M may be set based on an actual requirement. This is not limited in this application. For example, M may be 1. Specifically, after performing step S104, the UE may perform cell reselection. Because the combination of the signal strength and the priority of the cell B is better than that of another cell (for example, the cell B has higher signal strength, and the cell B has higher priority), the UE still chooses the cell B. If the UE still cannot successfully establish the RRC connection, the UE lowers the priority of the cell B again. In other words, after performing step S104, the UE still chooses the cell B to camp on after performing cell reselection for one time, but still does not successfully establish the RRC connection. In this case, the UE may perform step S105, namely, lower the priority of the cell B.

S106: The UE triggers to establish an RRC connection with a network device corresponding to a cell on which the UE camps, and starts a second timer.

After the UE chooses, through cell reselection, another cell (a cell other than the cell B) to camp on, the UE may be triggered to establish the RRC connection with the network device corresponding to the cell on which the UE camps, and start the second timer.

In some embodiments of this application, the UE initiates the RRC connection establishment process to establish the RRC connection with the network device corresponding to the cell on which the UE camps. In this case, the second timer may be the T300 timer.

It may be understood that a reason why the UE triggers to establish the RRC connection with the network device corresponding to the cell on which the UE camps may be Mo Signalling, MO data, and the like. For example, because the UE is calling, the UE has a requirement for transmitting a voice packet, the UE may trigger to establish the RRC connection with the network device corresponding to the cell on which the UE camps. For another example, if the UE initiates the periodic TAU, the UE needs to establish the RRC connection with the network device corresponding to the cell on which the UE camps.

S107: The UE successfully establishes the RRC connection with the network device corresponding to the cell on which the UE camps, and the second timer stops timing.

After the UE successfully establishes the RRC connection with the network device corresponding to another cell that is reselected after the priority of the cell B is lowered, the second timer stops timing.

In some embodiments of this application, the second timer is the T300 timer. In this case, after the UE receives the RRC Connection Setup, the second timer stops timing. In this case, the UE successfully establishes the RRC connection with the network device corresponding to the cell on which the UE camps.

S108: The UE camps on another cell to perform a call.

After successfully establishing the RRC connection with the network device corresponding to another cell that is reselected after the priority of the cell B is lowered, the UE may camp on the another cell to perform a call.

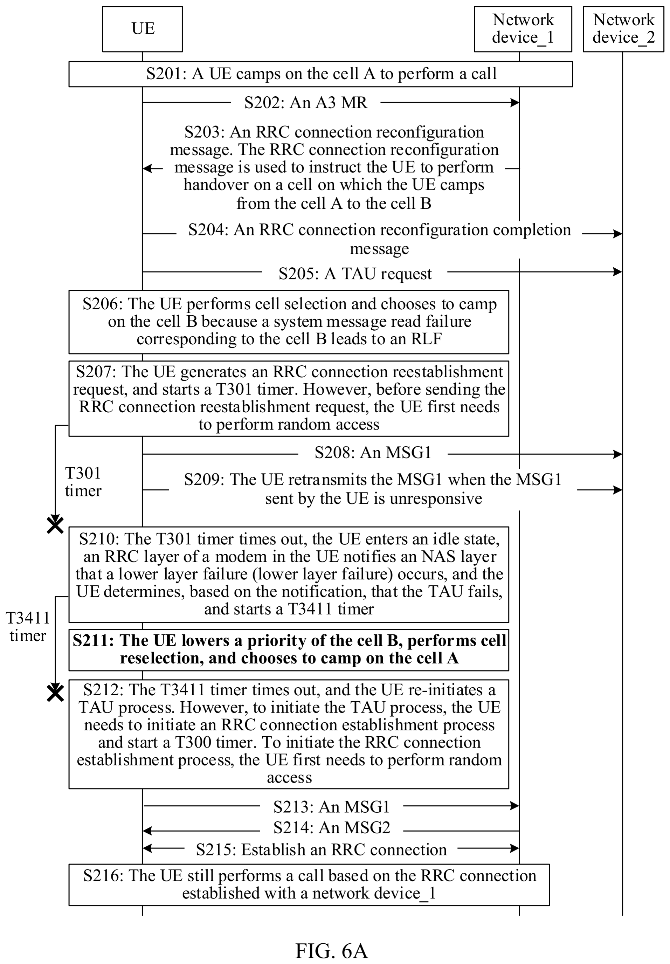

A specific implementation of the foregoing embodiments is described with reference to FIG. 6A.

Refer to FIG 6A. FIG. 6A is a flowchart of another communication method according to an embodiment of this application. The communication method may include, but is not limited to, the following steps.

S201: A UE camps on a cell A to perform a call.

The UE camps on the cell A (the cell A may be understood as a third cell herein), and the UE may perform a call when camping on the cell A.

S202: The UE sends an A3 MR to a network device_1. The network device_1 is a network device corresponding to the cell A.

After performing measurement and evaluation on neighboring cells of the cell A, the UE may send the A3 MR to the network device_1.

In some embodiments of this application, before the UE performs step S202, the UE may receive a measurement indication sent by the network device_1. The UE may perform measurement and evaluation on neighboring cells of the cell A based on the measurement indication.

In some embodiments of this application, the UE may send a measurement report of another type (for example, an A5 MR) to the network device_1. This is not specifically limited in this application.

Correspondingly, the network device_1 may receive the A3 MR sent by the UE.

S203: The network device_1 sends an RRC connection reconfiguration message to the UE. The RRC connection reconfiguration message is used to instruct the UE to perform handover on a cell on which the UE camps from the cell A to a cell B.

After receiving the A3 MR sent by the UE, the network device_1 may determine, based on the A3 MR, that a cell B (the cell B may be understood as a first cell herein) has relatively high signal strength, and the cell B has a relatively high priority. The network device_1 may communicate with a network device corresponding to the cell B. When the network device_1 determines, based on the communication process, that the cell B allows the UE to access, the network device_1 decides to perform handover (HO) on the cell on which the UE camps from the cell A to the cell B, and sends the RRC connection reconfiguration (RRC Connection Reconfiguration) message to the UE. It may be understood that the RRC connection reconfiguration message may be used to instruct the UE to perform handover on the cell on which the UE camps from the cell A to the cell B.

Correspondingly, the UE may receive the RRC connection reconfiguration message sent by the network device_1.

S204: The UE sends an RRC connection reconfiguration completion message to the network device_2. The network device_2 is the network device corresponding to the cell B.

After receiving the RRC connection reconfiguration message sent by the network device_1, the UE may access the cell B based on the configuration carried in the RRC connection reconfiguration message, and send an RRC connection reconfiguration completion message (RRC Connection Reconfiguration Complete) to the network device_2 after the access succeeds. In this way, the UE can camp on the cell B to perform a call.

Correspondingly, the network device_2 may receive the RRC connection reconfiguration completion message sent by the UE.

S205: The UE sends a TAU request to the network device_2.

After the UE performs handover on the cell A to the cell B to camp on, once the UE detects that a tracking area (Tracking Area, TA) changes, the UE may initiate a TAU process. Specifically, the UE may send the TAU request to the network device corresponding to the cell B.

In some embodiments of this application, the UE only generates the TAU request, and does not send the TAU request. In some embodiments, the UE has sent the TAU request to the network device_2, but the network device_2 may not receive and not correctly parse the TAU request. In the foregoing situation, the UE fails to receive a TAU acceptance (TAU accept) message replied by a network side. In other words, the UE fails to complete the TAU process.

S206: The UE performs cell selection and chooses to camp on the cell B because a system message read failure corresponding to the cell B leads to an RLF.

After the UE performs handover (HO) on the cell A to the cell B, the UE camps on the cell B to perform a call. During the call performed by the UE when camping on the cell B, the RLF is caused because the UE fails to read a system message (SIB read failure) corresponding to the cell B, so that the UE performs cell selection. In some embodiments of this application, because the cell B has strongest signal strength, the UE still chooses the cell B to camp on when performing cell selection. In some embodiments of this application, the UE may perform cell selection based on carrier frequency information and a cell parameter that are previously stored. Because the cell B is a cell having strongest signal strength among several cells corresponding to the carrier frequency information and the cell parameter, the UE chooses the cell B to camp on.

In some embodiments of this application, the cell B is a neighboring cell of the cell A.

It may be understood that the system message read failure corresponding to the cell B may include that the UE does not receive a system message of the cell B, or may include that the UE receives a system message of the cell B but does not parse successfully.

It may be understood that the RLF may also be caused by another reason. Reference may be made to the above. Details are not described herein again.

It may be understood that for the specific implementation of step S206, reference may be made to the related descriptions in step S102 above. Details are not described herein again.

S207: The UE generates an RRC connection reestablishment request, and starts a T301 timer. However, before sending the RRC connection reestablishment request, the UE first needs to perform random access.

After choosing to camp on the cell B, the UE may generate the RRC connection reestablishment request, and start the T301 timer. An upper-layer module in the UE instructs a lower-layer module to prepare to send the RRC connection reestablishment request. Before sending the RRC connection reestablishment request, the UE first needs to perform random access.

It may be understood that in this application, a specific sequence of generating, by the UE, the RRC connection reestablishment request and starting the T301 timer are not limited. An interval between generating, by the UE, the RRC connection reestablishment request and starting the T301 timer is relatively short.

It may be understood that for related descriptions of the T301 timer, reference may be made to the above. Details are not described herein again.

S208: The UE sends an MSG1 to the network device_2.

A first step of the random access is that the MSG1 is sent. Because the UE camps on the cell B, the UE sends the MSG1 to the network device_2 during the random access.

S209: The UE retransmits the MSG1 to the network device_2 when the MSG1 sent by the UE is unresponsive.

If the MSG1 sent by the UE to the network device_2 is unresponsive, the UE may retransmit the MSG1 to the network device_2. In some embodiments of this application, if the MSG1 sent by the UE to the network device_2 is unresponsive, the UE may continuously retransmit the MSG1 to the cell B until the T301 timer times out.

It may be understood that the MSG1 sent by the UE being unresponsive is only an example of a random access failure, and should not be considered as a limitation to this application. Another case of random access failure may exist. For example, an MSG3 sent by the UE is unresponsive.

It may be understood that for the specific implementation of step S207-S209, reference may be made to the related descriptions in step S103 above. Details are not described herein again.

S210: The T301 timer times out, the UE enters an idle state, an RRC layer of a modem in the UE notifies an NAS layer that a lower layer failure (lower layer failure) occurs, and the UE determines, based on the notification, that the TAU fails, and starts a T3411 timer.

It may be understood that after starting the T301 timer, the UE first performs random access, so as to subsequently send the RRC connection reestablishment request. If the UE does not receive the RRC Connection Reestablishment or the RRC Connection Reestablishment Reject within a period defined by the T301 timer, the T301 timer times out, and the UE enters the idle state. In this case, the UE still camps on the cell B, but the UE does not establish an RRC connection with the network device_2. A lower-layer module (for example, an RRC layer) in the UE may instruct an upper-layer module (for example, the NAS layer) that the lower layer failure (lower layer failure) occurs. The UE may determine, based on the instruction, that the TAU fails, and start the T3411 timer.

It may be understood that the T3411 timer is a timer started after the TAU fails. After the T3411 times out, the UE re-initiates the TAU process. In other words, the period defined by the T3411 timer is equal to an interval duration at which the UE initiates the TAU process.

It may be understood that the period defined by the T3411 timer may use a duration specified by a protocol, or may use a user-defined duration. This is not limited in this application. In some embodiments of this application, as stipulated by the protocol, the period defined by the T3411 timer is 10 seconds. In other words, the duration of the T3411 timer specified by the protocol is 10 seconds. In some other embodiments of this application, the period defined by the T3411 timer may be optimized to 2 seconds, and the duration of the T3411 timer specified by the protocol is not used on some chip platforms.

S211: The UE lowers a priority of the cell B, performs cell reselection, and chooses to camp on the cell A.

After the UE returns to the idle state, the UE may lower the priority of the cell B, and perform cell reselection. Because the priority of the cell B is lowered, the UE no longer chooses the cell B (the cell B may be understood as a first cell herein) during cell reselection, but selects another cell. The another cell may be referred to as a second cell. The second cell is a cell different from the first cell. For example, the UE may choose to camp on the cell A. In other words, in one case, the second cell may be the cell A. It may be understood that in another case, the second cell may alternatively be a cell C different from the cell B and the cell A.

It may be understood that, for a specific manner in which the UE lowers the priority of the cell B, reference may be made to the related descriptions in step S105. Details are not described herein again.

The performing cell reselection may include performing accelerated cell reselection. Specifically, the accelerated cell reselection may be performed in at least one of the following two manners.
1) Based on the foregoing description, the UE can start to perform cell reselection only after a duration for which the UE camps on a cell currently being camped on reaches a specified duration (for example, 1s). In some embodiments of this application, the UE may reduce a duration for which the cell camps on an original cell before performing cell reselection. In other words, the UE may reduce the foregoing specified duration. In other words, the specified duration for which the UE needs to camp on the cell currently being camped on is less than an original specified duration. It may be understood that the originally specified duration may be a duration for which the cell needs to be camped on before cell reselection is performed specified by a related protocol.
2) In some embodiments of this application, the UE may reduce a duration for which the UE evaluates a target cell during the cell reselection. In other words, the duration for which the UE evaluates the target cell during the cell reselection may be less than an original evaluation duration. It may be understood that the original evaluation duration may be an evaluation duration specified by the related protocol before cell reselection is performed. In a possible implementation, the evaluation duration may refer to Treselection. Treselection is a cell-level parameter. If the target cell always meets the criterion for cell reselection within a trigger time of Treselection, the UE performs cell reselection.

In some embodiments of this application, after the UE lowers the priority of the cell B, an upper-layer module may instruct a lower-layer module (for example, an ML1 layer) that the priority of the cell B is lowered. After the lower-layer module of the UE learns that the priority of the cell B is lowered, the UE may immediately perform cell reselection, namely, start to measure and evaluate neighboring cells of the cell B, and does not need to wait for a duration of camping on the cell B reaching a specified duration to perform cell reselection. It may be understood that as shown in FIG. 3, the ML1 layer refers to a PHY layer in the modem of the UE.

In some embodiments of this application, after the UE lowers the priority of the cell B, the upper-layer module (for example, the RRC layer) may instruct the lower-layer module (for example, the ML1 layer) that the priority of the cell B is lowered. After the lower-layer module of the UE learns that the priority of the cell B is lowered, the UE may immediately perform cell reselection, and does not need to wait for the duration for which the UE camps on the cell B reaching a specified duration to perform cell reselection. In addition, during the cell reselection, the UE may perform cell reselection until the duration for which the UE evaluates the target cell reaches the reduced evaluation duration described above. In other words, the target cell is reselected.

In some embodiments of this application, after the UE lowers the priority of the cell B, the upper-layer module (for example, the RRC layer) may instruct the lower-layer module (for example, the ML1 layer) that the priority of the cell B is lowered. After the lower-layer module of the UE learns that the priority of the cell B is lowered, the UE may perform cell reselection after the duration for which the UE camps on the cell B reaches the reduced specified duration described above. In addition, the UE may perform cell reselection when the duration for which the UE evaluates the target cell during the cell reselection reaches the reduced evaluation duration described above. In other words, the target cell is reselected.

In some embodiments of this application, that the upper-layer module in the UE instructs the lower-layer module that the priority of the cell B is lowered may specifically include: the upper-layer module (for example, the RRC layer) of the UE may send a corresponding message (for example, an RRC deprio req) to the lower-layer module (for example, the ML1 layer) to instruct the lower-layer module that the priority of the cell B is lowered.

It may be understood that for the specific manner in which the UE performs cell reselection, reference may be made to the related descriptions in step S105. Details are not described herein again.

S212: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

After the T3411 timer times out, the UE may re-initiate the TAU process. However, to initiate the TAU process, the UE needs to first initiate the RRC connection establishment process and start the T300 timer. To initiate the RRC connection establishment process, the UE first needs to perform random access. It may be understood that for related descriptions of the T300 timer, reference may be made to the above. Details are not described herein again.

It should be noted that based on step S211 and step S212, the T3411 timer times out after the UE camps on the cell A through cell reselection.

S213: The UE sends the MSG1 to the network device_1.

According to the foregoing description, to re-initiate the TAU process, the UE first needs to initiate the RRC connection establishment process, and the initiate the RRC connection establishment process, the UE first needs to perform random access. A first step of the random access is sending the MSG1. After re-initiating the TAU process, the UE may send the MSG1 to the network device (namely, the network device_1) corresponding to the cell currently being camped on.

Correspondingly, the network device_1 may receive the MSG1 sent by the UE.

S214: The network device_1 sends an MSG2 to the UE.

It may be understood that after receiving the MSG1 sent by the UE, the network device_1 may send the MSG2 to the UE.

Correspondingly, the UE can receive the MSG2 sent by the cell A. It may be understood that after the UE receives the MSG2 sent by the network device_1, the first step and the second step of the random access are completed. Next, the UE may establish the RRC connection with the network device_1.

S215: The UE establishes the RRC connection with the network device_1.

After receiving the MSG2 sent by the network device_1, the UE may establish the RRC connection with the network device_1. Specifically, the UE may send the RRC connection request (RRC Connection Request) to the network device_1. After receiving the RRC connection request sent by the UE, the network device_1 may send an RRC connection establishment message (RRC Connection Setup) to the UE. After receiving the RRC connection establishment message sent by the network device_1, the UE may send an RRC connection establishment completion message (RRC Connection Setup Complete) to the network device_1, and the network device_1 may receive the RRC connection establishment completion message. The UE successfully establishes the RRC connection with the network device_1 so far.

S216: The UE still performs a call based on the RRC connection established with the network device_1.

After establishing the RRC connection with the network device_1, the UE may camp on the cell A based on the RRC connection and still perform a call.

In some embodiments of this application, the UE may not perform step S202 to step S204. In other words, the UE may not perform handover (HO) on the cell A to the cell B. In this case, the UE may still initiate the TAU process. However, in this case, the TAU process initiated by the UE is a periodic TAU that differs from the TAU initiated due to the handover. For related descriptions of the periodic TAU, reference may be made to the above. Details are not described herein again.

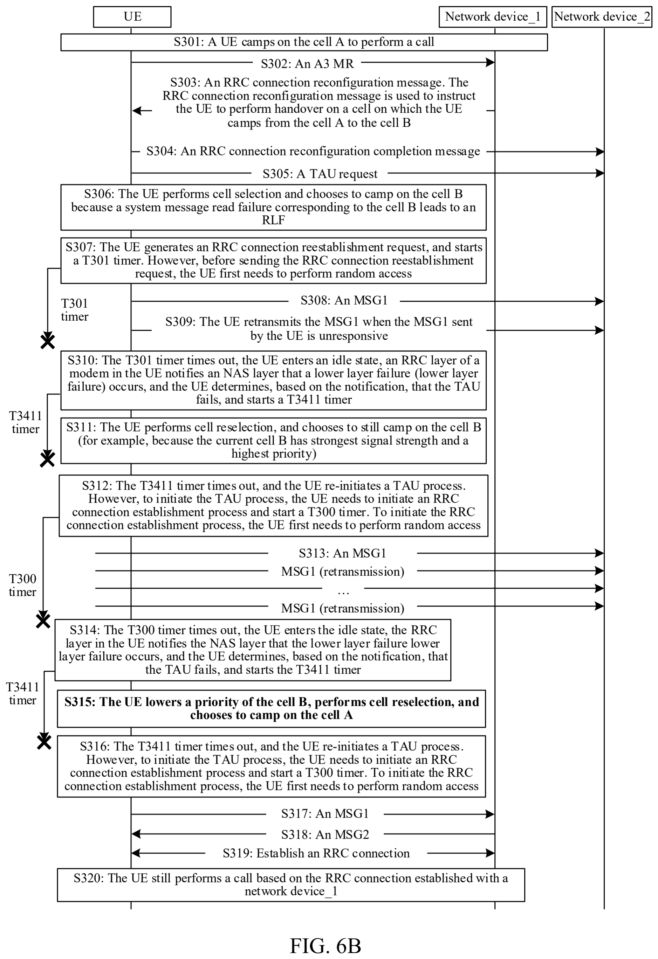

**A specific implementation of the foregoing embodiments is described with reference to** **FIG. 6B****.**

Refer to FIG 6B. FIG. 6B is a flowchart of another communication method according to an embodiment of this application. The communication method may include, but is not limited to, the following steps.

S301: A UE camps on a cell A to perform a call.

S302: The UE sends an A3 MR to a network device_1.

S303: The network device_1 sends an RRC connection reconfiguration message to the UE. The RRC connection reconfiguration message is used to instruct the UE to perform handover on a cell on which the UE camps from the cell A to a cell B.

S304: The UE sends an RRC connection reconfiguration completion message to the network device_2. The network device_2 is the network device corresponding to the cell B.

S305: The UE sends a TAU request to the network device_2.

S306: The UE performs cell selection and chooses to camp on the cell B because a system message read failure corresponding to the cell B leads to an RLF.

S307: The UE generates an RRC connection reestablishment request, and starts a T301 timer. However, before sending the RRC connection reestablishment request, the UE first needs to perform random access.

S308: The UE sends an MSG1 to the network device_2.

S309: The UE retransmits the MSG1 to the network device_2 when the MSG1 sent by the UE is unresponsive.

S310: The T301 timer times out, the UE enters an idle state, an RRC layer of a modem in the UE notifies an NAS layer that a lower layer failure (lower layer failure) occurs, and the UE determines, based on the notification, that the TAU fails, and starts the T3411 timer.

It may be understood that for the specific implementation of step S301 to step S310, reference may be made to the related descriptions in step S201 to step S310. Details are not described herein again.

S311: The UE performs cell reselection, and chooses to still camp on the cell B.

S312: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

S313: The UE sends the MSG1 to the network device_2.

S314: The T300 timer times out, the UE enters the idle state, the RRC layer in the UE notifies the NAS layer that the lower layer failure (lower layer failure) occurs, and the UE determines, based on the notification, that the TAU fails, and starts the T3411 timer.

It may be understood that for the specific implementation of step S311 to step S314, reference may be made to the related descriptions in step S10 to step S13. Details are not described herein again.

S315: The UE lowers a priority of the cell B, performs cell reselection, and chooses to camp on the cell A.

S316: The T3411 timer times out, and the UE re-initiates a TAU process. However, to initiate the TAU process, the UE needs to initiate the RRC connection establishment process and start the T300 timer. To initiate the RRC connection establishment process, the UE first needs to perform random access.

S317: The UE sends the MSG1 to the network device_1.

S318: The network device_1 sends an MSG2 to the UE.

S319: The UE establishes the RRC connection with the network device_1.

S320: The UE still performs a call based on the RRC connection established with the network device_1.

It may be understood that for the specific implementation of step S315 to step S320, reference may be made to the related descriptions in step S211 to step S216. Details are not described herein again.

According to the foregoing method, the UE may lower the priority of the problem cell in a specific occasion or situation, and perform cell reselection based on the lowered priority of the problem cell, so as to avoid that the UE always chooses to camp on the problem cell during the cell reselection, thereby avoiding a call drop of the UE in a call scenario, and/or avoiding or optimizing a problem of silent calls for a long time (for example, reducing a silence time of a call). In addition, the UE may accelerate reselection after lowering the priority of the problem cell. Compared with the cell reselection process shown in step S10, a duration for which the cell reselection process shown in step S211 is triggered is shorter, and a duration for which the target cell is evaluated is shorter during the cell reselection, so that a duration of the entire cell reselection process is shortened, and the UE is enabled to reselect from a problem cell originally camped on to another cell as soon as possible. In this way, the duration for which the RRC connection is successfully established is shortened, and the silence problem in the call is reduced (for example, the silence time in the call is shortened).

In some embodiments of this application, after lowering the priority of the cell B, the UE may further select, through cell reselection, another cell other than the cell A and the cell B to camp on. This is not limited in this application.

It should be noted that for a start occasion (or referred to as a start reason (cause of start)) and a timeout occasion (or referred to as a timeout reason) of each timer involved in embodiments of this application, reference may be made to descriptions in related standard protocols. The occasions are understood with reference to specific scenarios involved in embodiments of this application.

**The device involved in embodiments of this application is described below.**

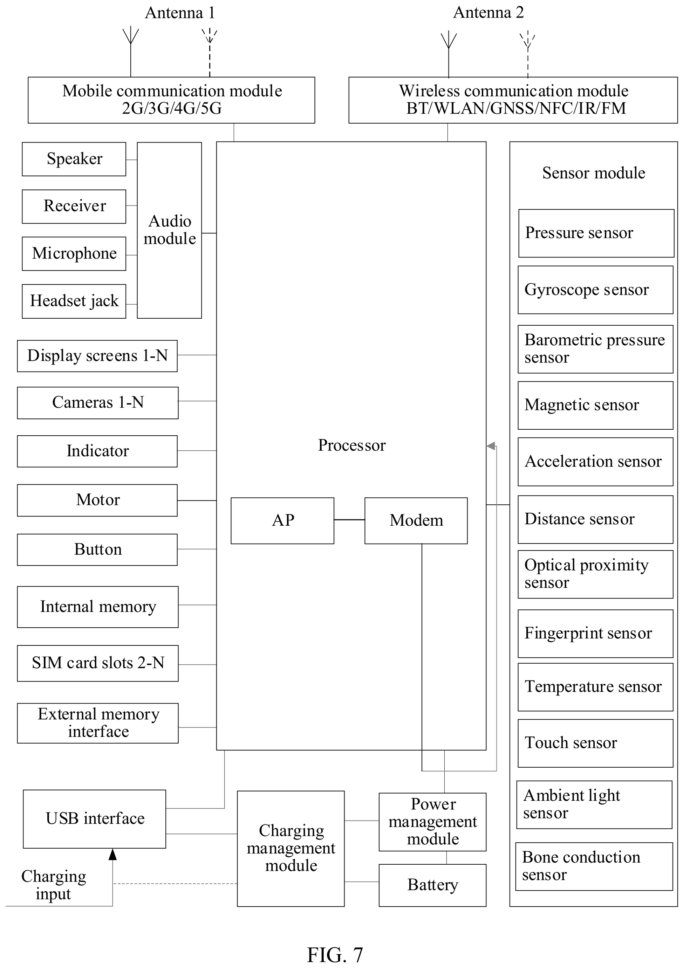

FIG. 7 is a schematic diagram of a hardware structure of a UE according to an embodiment of this application.

As shown in FIG. 7, a structure of a UE may include a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display screen, a SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structures illustrated in embodiments of this application do not constitute a specific limitation on the UE. In some other embodiments, the UE may include more or fewer components than those shown in the figure, or some merged components, or some split components, or different component arrangements. The components shown in the figure may be implemented by hardware, software, or a combination of software and hardware.

The processor may include one or more processing units. For example, the processor may include an application processor (Application Processor, AP), a modem processor (Modem, or may be referred to as a baseband processor), a graphics processor (Graphics Processing Unit, GPU), an image signal processor (Image Signal Processor, ISP), a controller, a video codec, a digital signal processor (Digital Signal Processor, DSP), and/or a neural-network processor (Neural-network Processing Unit, NPU), and the like. Different processing units may be devices independent of each other, or may be integrated in one or more processors. The processor is a nerve center and a command center of the UE. The controller may generate an operation control signal based on instruction operation code and a timing signal, and control obtaining and executing of instructions.

A wireless communication function of the UE may be implemented through the antenna 1, the antenna 2, the mobile communication module, the wireless communication module, the modem, and the like. In some embodiments, in the UE, the antenna 1 is coupled to the mobile communication module, and the antenna 2 is coupled to the wireless communication module, so that the UE can communicate with a network and another device through a wireless communication technology.

The operating system of the UE may use a layered architecture, an event-driven architecture, a microcore architecture, a microservice architecture, or a cloud architecture. In this embodiment of this application, an Android system with a layered architecture is used as an example to describe a software structure of the UE.

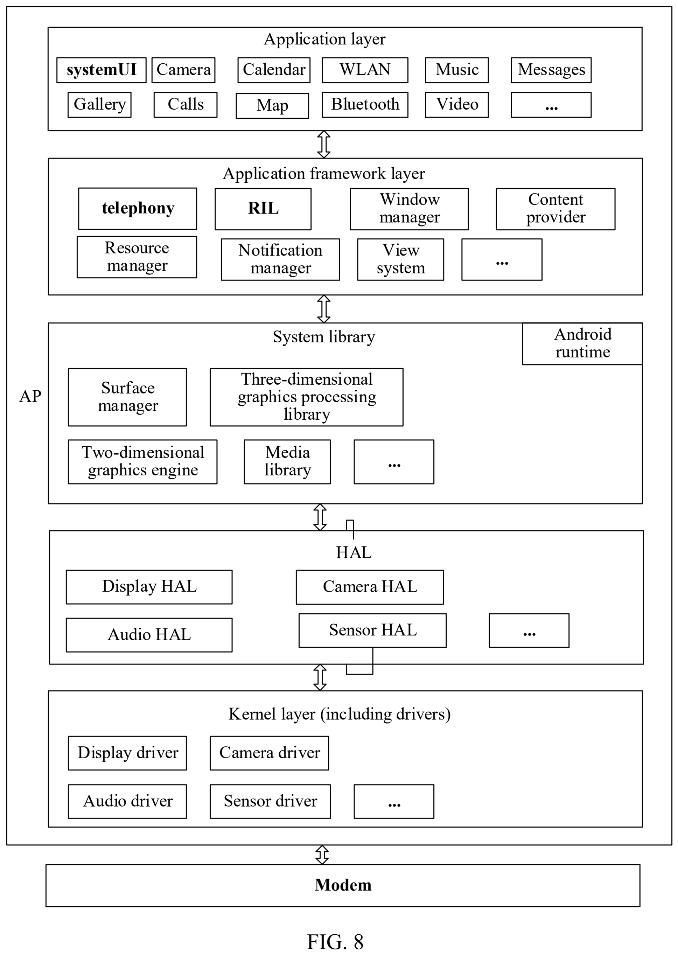

FIG. 8 is a schematic diagram of a software structure of a UE according to an embodiment of this application.

The software structure of the UE uses a layered architecture. In the hierarchical architecture, software is divided into a plurality of layers, and each layer has a clear role and task. The layers communicate with each other through a software interface. By using an Android system and an Android system running on an AP as an example, in some embodiments, the Android system is divided into five layers, which respectively are an application layer, an application framework layer (Framework), an Android runtime (Android runtime) and system library, a hardware abstraction layer (HAL), and a system kernel layer (Kernel) from top to bottom.

The application layer may include a series of application packages. The application package may include APPs such as Camera, Gallery, Calendar, Calls, Map, WLAN, Bluetooth, Music, Videos, and Messages The application layer may further include a systemUI (a system UI). The systemUI is configured to display an interface of the UE, for example, display a signal icon corresponding to a SIM card, and display a call interface. The application framework layer provides an application programming interface (Application Programming Interface, API) and a programming framework for the applications in the application layer. The application framework layer includes some predefined functions. For example, the application framework layer may include a window manager, a content provider, a view system, a phone manager, a resource manager, a notification manager, and the like. The phone manager is configured to provide a communication function of the UE, for example, call status management (including answering, hanging up, and the like). The phone manager is represented by telephony in FIG. 8. The application framework layer may further include an RIL (Radio Interface Layer, wireless communication interface layer), and the modem processor (Modem) may exchange information with the telephony through the RIL.

The foregoing embodiments are merely used to describe the technical solutions of this application, but are not intended to limit this application. Although this application is described in detail with reference to the foregoing embodiments, it should be understood by a person skilled in the art that modifications may still be made to the technical solutions described in the foregoing embodiments, or equivalent replacements may be made to the part of the technical features. However, these modifications or replacements do not cause the essence of corresponding technical solutions to depart from the scope of the technical solutions in embodiments of this application.

## Claims

1. A communication method, applied to a terminal device, the method comprising:
camping, by the terminal device, on a first cell;
performing, by the terminal device, a call in the first cell;
performing, by the terminal device, cell selection when a first network abnormality occurs during the call in the first cell, and choosing to camp on the first cell;
starting, by the terminal device, a T301 timer, and sending a first message to a first network device, wherein the first network device is a network device corresponding to the first cell, and the first message is used to request random access;
lowering, by the terminal device, a carrier frequency priority of the first cell when the T301 timer times out;
performing, by the terminal device, cell reselection based on the lowered carrier frequency priority of the first cell, and choosing to camp on a second cell, wherein the second cell is different from the first cell;
establishing, by the terminal device, an RRC connection with a second network device, wherein the second network device is a network device corresponding to the second cell; and
still performing, by the terminal device, the call on the second cell through the established RRC connection.

2. The method according to claim 1, wherein after the terminal device lowers the carrier frequency priority of the first cell, the performing, by the terminal device, cell reselection specifically comprises:
sending, by an RRC layer in the terminal device, a second message to an ML1 layer in the terminal device, wherein the second message is used to instruct the ML1 layer to perform accelerated cell reselection;
receiving, by the ML1 layer in the terminal device, the second message; and
performing, by the terminal device, the accelerated cell reselection based on the second message.

3. The method according to claim 2, wherein the performing the accelerated cell reselection comprises: a duration for which the terminal device camps on an original cell before performing the cell reselection is less than a first preset duration.

4. The method according to claim 2 or 3, wherein the performing the accelerated cell reselection further comprises: a duration for which the terminal device evaluates a target cell during the cell reselection is less than a second preset duration, and the target cell comprises the second cell.

5. The method according to claim 4, wherein a sum of a duration for which the terminal device camps on an original cell and the duration for evaluating the target cell is less than a duration of a T3411 timer currently used by the terminal device.

6. The method according to any one of claims 1 to 5, wherein that the first network abnormality occurs during the call performed by the terminal device in the first cell specifically comprises: during the call performed by the terminal device when camping on the first cell, a failure in reading a system message of the first cell causes a radio link failure RLF.

7. The method according to any one of claims 1 to 6, wherein the first cell is one of at least one neighboring cell of a third cell, and before the performing cell selection, the method further comprises:
camping, by the terminal device, on the third cell to perform the call; and
performing, by the terminal device, handover on the third cell to camp on the first cell; and
the first network abnormality occurs when the terminal device camps on the first cell to perform the call.

8. The method according to claim 7, wherein after the performing, by the terminal device, handover on the third cell to camp on the first cell, the method further comprises: initiating, by the terminal device, a TAU process;
after the terminal device sends the first message to the first network device, the method further comprises: starting, by the terminal device, a T3411 timer after the T301 timer times out; and
the establishing, by a terminal device, an RRC connection with a second network device specifically comprises: re-initiating, by the terminal device, a TAU process when the T3411 timer times out, and establishing the RRC connection with the second network device.

9. The method according to claim 7 or 8, wherein in neighboring cells of the third cell, the first cell has strongest signal strength, and the first cell has a highest carrier frequency priority.

10. The method according to any one of claims 7 to 9, wherein the lowered carrier frequency priority corresponding to the first cell is equal to a minimum value of priorities corresponding to several neighboring cells of the third cell.

11. A communication method, applied to a terminal device, the method comprising:
performing cell reselection when a second network abnormality occurs during a call performed by the terminal device when camping on a first cell, and choosing to camp on the first cell;
starting, by the terminal device, a T300 timer, and sending a first message to a first network device, wherein the first network device is a network device corresponding to the first cell, and the first message is used to request random access;
lowering, by the terminal device, a carrier frequency priority of the first cell when the T300 timer times out;
performing, by the terminal device, cell reselection based on the lowered carrier frequency priority of the first cell, and choosing to camp on a second cell, wherein the second cell is different from the first cell;
establishing, by the terminal device, an RRC connection with a second network device, wherein the second network device is a network device corresponding to the second cell; and
still performing, by the terminal device, the call on the second cell through the established RRC connection.

12. The method according to claim 11, wherein after the terminal device lowers the carrier frequency priority of the first cell, the performing, by the terminal device, cell reselection specifically comprises:
sending, by an RRC layer in the terminal device, a second message to an ML1 layer in the terminal device, wherein the second message is used to instruct the ML1 layer to perform accelerated cell reselection;
receiving, by the ML1 layer in the terminal device, the second message; and
performing, by the terminal device, the accelerated cell reselection based on the second message.

13. The method according to claim 12, wherein the performing the accelerated cell reselection comprises: a duration for which the terminal device camps on an original cell before performing the cell reselection is less than a first preset duration.

14. The method according to claim 12 or 13, wherein the performing the accelerated cell reselection further comprises: a duration for which the terminal device evaluates a target cell during the cell reselection is less than a second preset duration, and the target cell comprises the second cell.

15. The method according to claim 14, wherein a sum of a duration for which the terminal device camps on an original cell and the duration for evaluating the target cell is less than a duration of a T3411 timer currently used by the terminal device.

16. The method according to any one of claims 11 to 15, wherein that the second network abnormality occurs during a call performed by the terminal device when camping on the first cell specifically comprises: during the call performed by the terminal device when camping on the first cell, the RRC layer in the terminal device notifies a NAS layer that a lower layer failure has occurred, and determines, based on the notification, that a TAU fails.

17. The method according to claim 16, wherein the first cell is one of at least one neighboring cell of a third cell, and before the performing cell reselection, and choosing to camp on the first cell, the method further comprises:
camping, by the terminal device, on the third cell to perform the call; and
performing, by the terminal device, handover on the third cell to camp on the first cell; and
performing cell selection when a first network abnormality occurs during a call performed by the terminal device when camping on the first cell, and choosing to camp on the second cell;
starting, by the terminal device, a T301 timer, and sending the first message to the first network device; and
notifying, by the RRC layer in the terminal device, the NAS layer that the lower layer failure occurs when the T301 timer times out.

18. The method according to claim 17, wherein after the performing, by the terminal device, handover on the third cell to camp on the first cell, the method further comprises: initiating, by the terminal device, a TAU process;
after the starting, by the terminal device, a T301 timer, and sending the first message to the first network device, the method further comprises: starting, by the terminal device, a T3411 timer when the T301 timer times out; and
the starting, by the terminal device, a T300 timer specifically comprises: re-initiating, by the terminal device, a TAU process when the T3411 timer times out, and starting the T300 timer.

19. The method according to any one of claims 11 to 18, wherein after the starting, by the terminal device, a T300 timer, and sending the first message to the first network device, the method further comprises: starting, by the terminal device, a T3411 timer when the T300 timer times out; and
the establishing, by a terminal device, an RRC connection with a second network device specifically comprises: re-initiating, by the terminal device, a TAU process when the T3411 timer times out, and establishing the RRC connection with the second network device.

20. The method according to claim 17 or 18, wherein in neighboring cells of the third cell, the first cell has strongest signal strength, and the first cell has a highest carrier frequency priority.

21. The method according to claim 17 or 18, wherein the lowered carrier frequency priority corresponding to the first cell is equal to a minimum value of priorities corresponding to several neighboring cells of the third cell.

22. A terminal device, comprising a processor and a memory, wherein the processor is configured to invoke and execute a computer program stored in the memory, so that the terminal device implements the method according to any one of claims 1 to 10 or 11 to 21.

23. A chip system, applied to a terminal device, wherein the chip system comprises at least one processor and an interface, the interface is configured to receive an instruction and transmit the instruction to the at least one processor, and the at least one processor runs the instruction, so that the terminal device performs the method according to any one of claims 1 to 10 or 11 to 21.
